# EUROPEAN PATENT APPLICATION

(11) **EP 4 575 949 A1**
(43) Date of publication of application: **25.06.2025**
(21) Application number: 23219112.2
(22) Date of filing: 21.12.2023
(51) Int. Cl.: G06Q 10/0635, G06F 18/21, G06N 20/00, G06Q 10/10, G06Q 50/18

(54) **ARTIFICIAL INTELLIGENCE REGULATORY TECHNIQUES**

(71) Applicant: INTEL Corporation, Santa Clara, CA 95054 (US)
(72) Inventor: Mueck, Markus Dominik, 82008 Unterhaching (DE)
(74) Representative: Goddar, Heinz J.

(57) **Abstract**

Artificial intelligence (AI) regulatory techniques are described. A method of managing AI comprises decoding an indication of an AI entity of a safety component of an AI system; decoding an indication of a regulatory policy associated with the safety component; and determining whether the AI entity is a high-risk AI (HRAI) entity or a non-HRAI (NHRAI) entity based on the indication of the regulatory policy. Other embodiments are described and claimed.

## Description

### BACKGROUND

Artificial Intelligence (Al) is a fast evolving family of technologies that can bring a wide array of economic and societal benefits across the spectrum of industries and social activities. By improving prediction, optimizing operations and resource allocation, and personalizing service delivery, the use of artificial intelligence can support socially and environmentally beneficial outcomes. Such action is especially desirable in high-impact sectors, including climate change, environment and health, the public sector, finance, mobility, home affairs and agriculture. However, the same elements and techniques that power the socio-economic benefits of Al can also bring about new risks or negative consequences for individuals or the society.

The European Commission (EC) is the executive branch of the European Union (EU), which is responsible for proposing legislation and enforcing EU laws. The EC is currently in the process of finalizing the regulations laying down harmonized rules on artificial intelligence referred to as the "Artificial Intelligence Act". The Al Act is a proposed EU law that assigns applications of Al to three risk categories including applications and systems that create an unacceptable risk (e.g., government-run social scoring) are banned, high-risk applications (e.g., CV-scanning tools that ranks job applicants) are subject to specific legal requirements, and applications not explicitly banned or listed as high-risk are largely left unregulated (see e.g., Proposal for a REGULATION OF THE EUROPEAN PARLIAMENT AND OF THE COUNCIL LAYING DOWN HARMONISED RULES ON ARTIFICIAL INTELLIGENCE (ARTIFICIAL INTELLIGENCE ACT) AND AMENDING CERTAIN UNION LEGISLATIVE ACTS, European Commission, Brussels, COM(2021) 206 final, 2021/0106 (COD) {SEC(2021) 167 final} - {SWD(2021) 84 final} - {SWD(2021) 85 final} (21 Apr. 2021) ("[AIA]"), the contents of which is hereby incorporated by reference in its entirety).

### BRIEF DESCRIPTION OF THE SEVERAL VIEWS OF THE DRAWINGS

To easily identify the discussion of any particular element or act, the significant digit or digits in a reference number refer to the figure number in which that element is first introduced.
FIG. 1 illustrates a system in accordance with one embodiment.
FIG. 2 illustrates a container in accordance with one embodiment.
FIG. 3 illustrates a verification system in accordance with one embodiment.
FIG. 4 illustrates an artificial intelligence (AI) system in accordance with one embodiment.
FIG. 5 illustrates an operating environment in accordance with one embodiment.
FIG. 6 illustrates a replacement system in accordance with one embodiment.
FIG. 7 illustrates a wireless communications system in accordance with one embodiment.
FIG. 8 illustrates an electronic device in accordance with one embodiment.
FIG. 9 illustrates a logic flow in accordance with one embodiment.
FIG. 10 illustrates a logic flow in accordance with one embodiment.
FIG. 11 illustrates a logic flow in accordance with one embodiment.
FIG. 12 illustrates computer readable storage medium in accordance with one embodiment.
FIG. 13 illustrates a computer system in accordance with one embodiment.
FIG. 14 illustrates a communications system in accordance with one embodiment.

### DETAILED DESCRIPTION

The present disclosure is generally related to data processing, service management, resource allocation and management, network communication, communication system implementations, and edge computing, and in particular, to artificial intelligence (Al) and machine learning (ML) regulatory mechanisms.

Artificial intelligence (Al) is a fast evolving family of technologies that can contribute to a wide array of economic and societal benefits across the spectrum of industries and social activities. By improving prediction, optimizing operations and resource allocation, and personalizing digital solutions available for individuals and organizations, the use of artificial intelligence can provide competitive advantages to companies and support socially and environmentally beneficial outcomes, for example in healthcare, farming, education and training, infrastructure management, energy, transport and logistics, public services, security, justice, resource and energy efficiency, and climate change mitigation and adaptation.

The European Commission (EC) is currently in the process of finalizing the Al Regulation (see e.g., [AIA]). As a next step, the European Standards Organizations (ESOs) will receive a standardization request with specific instructions to define technical and testable requirements in Harmonized Standards (HS). ETSI, CEN and CENELEC will be tasked to develop such HS. The [AIA] introduces a list of so-called "High Risk" systems and related requirements to be met. The European Union (EU) Parliament & EU Council have drafted a compromise proposal titled "DRAFT Compromise Amendments on the Draft Report Proposal for a regulation of the European Parliament and of the Council on harmonised rules on Artificial Intelligence (Artificial Intelligence Act) and amending certain Union Legislative Acts," (COM(2021)0206 - C9 0146/2021 - 2021/0106(COD)), 9^{th} May 2023 ("[AIA Proposal]"). In the [AIA Proposal], the "High Risk" category specifically relates to "Digital Infrastructure" which includes Wireless Communications systems such as 3GPP systems, stating "Annex III, Item 2 of [2]: Management and operation of critical infrastructure: (aa) AI systems intended to be used as safety components in the management and operation of the supply of water, gas, heating, electricity and critical digital infrastructure." The term "critical digital infrastructure" is further defined in the DIRECTIVE (EU) 2022/2557 OF THE EUROPEAN PARLIAMENT AND OF THE COUNCIL of 14 December 2022 ("[EU Directive]") on the resilience of critical entities. It explicitly includes "Providers of electronic communications services" such as 3GPP based wireless communications networks and others.

More particularly, Article 1 of the [AIA] states the high level framework/requirements for Al systems. The regulation further differentiates between "high-risk Al systems" and "non-high-risk Al systems." High-Risk Al (HRAI) systems are Al systems likely to pose high risks to fundamental rights and safety, according to Article 6 of the [AIA]. Non-High-Risk AI (NHRAI) systems are Al systems for which very limited transparency obligations are imposed, for example, in terms of the provision of information to flag the use of an Al system when interacting with humans. Products are evaluated to meet "essential requirements" (e.g., high quality data, documentation and traceability, transparency, human oversight, accuracy and robustness) to be further detailed by ESOs in HS.

Currently, there is very little regulation of Al systems. In particular, there is currently no differentiation between HRAI systems and NHRAI systems, and little to no restrictions or regulations on the operation of Al systems. The [AIA] will specify restrictions or regulations on the operation of Al systems and differentiate between HRAI systems and NHRAI systems. Currently existing Al systems, including those used for commercial purposes, have no such solutions implemented. Some existing Al systems do have self-imposed restrictions put in place, but these self-imposed restrictions are not aligned to the [AIA], [AIA Proposal], and [EU Directive] (collectively as "AI Regulatory Framework").

The present disclosure provides solutions for the basic requirements of the AI Regulatory Framework, which can be implemented in any Al related equipment. Specifically, following the requirements indicated above, the present disclosure introduces solutions for any critical digital infrastructure system and other systems, components, and/or applications in scope of the AI Regulatory Framework. In one embodiment, for example, it is proposed to physically and/or logically separate: (1) any AI entity of the critical infrastructure system which serves as a "safety component in the management and operation"; and (2) any other AI entity of the same system. In one embodiment, for example, outputs of any AI entity of the critical infrastructure system which serves as a "safety component in the management and operation" are proposed to be "gated" such that verified decisions are authorized to be conveyed to other system entities. In one embodiment, for example, it is proposed to introduce a redundant non-AI based decision making entity that may be used to replace the AI-based decisions in case that AI-based decisions do not meet the requirements of the AI Regulatory Framework on high risk systems (e.g., biases are identified, etc.).

The embodiments provide significant technical advantages relative to conventional systems. For example, the requirements introduced by the compromise proposal of the European AI Act [AIA Proposal] are relatively new since they were published on May 9, 2023, so there is no related solutions available yet. In traditional AI systems, either: (1) AI decisions are used as is without further verification; or (2) some proprietary verification of the AI decisions are conducted which are typically hard to verify. Embodiments propose a novel open and to-be-standardized solution for a well-defined and verifiable "gating" of critical AI decisions. It is expected that AI system (components) under the "High Risk" category of the [AIA Proposal] will implement the related solution in order to achieve access to the European Single Market and likely other markets which will be inspired by the regulations in Europe. For example, embodiments address the specific requirements of the compromise proposals on the European AI Regulation, such as defined in the [AIA Proposal]. In particular, embodiments address the question on how to manage that: (1) part of a wireless communication system (including 3GPP based wireless communication system) is a candidate to meet the requirements of "High Risk" category AI systems as defined in Annex III of the [AIA Proposal], in particular "AI systems intended to be used as safety components in the management and operation of ... critical digital infrastructure"; and (2) other parts of the same system do not meet the requirements. The related solutions are expected to be implemented in order to meet market access requirements in the European Single Market and likely other regions/countries. Without these solutions outlined above, it is expected that an AI system will not be able to be placed on the single European Market. Also, other regions/countries typically apply related European requirements (further detailed in Harmonised European Norms). So, those requirements will be met to achieve market access beyond Europe as well. As a result, the improved AI-related equipment as described herein will provide faster and more efficient use of limited and scarce resources, such as AI compute, memory utilization, resource allocations such as radiofrequency (RF) spectrum, bandwidth assignments, system throughput, heat production, power consumption, and other technical resources.

The following description and the drawings illustrate specific aspects to enable those skilled in the art to practice them. Other aspects may incorporate structural, logical, electrical, process, and other changes. Portions and features of some aspects may be included in, or substituted for, those of other aspects, and are intended to cover available equivalents of the elements described.

The word "example" is used herein to mean "serving as an example, instance, or illustration." Any aspect or design described herein as "example" is not to be construed as preferred or advantageous over other aspects or designs.

The words "plurality" and "multiple" in the description or the claims expressly refer to a quantity greater than one. The terms "group (of)," "set (of)," "collection (of)," "series (of)," "sequence (of)," "grouping (of)," etc., and the like in the description or in the claims refer to a quantity equal to or greater than one, i.e. one or more. Any term expressed in plural form that does not expressly state "plurality" or "multiple" likewise refers to a quantity equal to or greater than one. The terms "proper subset," "reduced subset," and "lesser subset" refer to a subset of a set that is not equal to the set, i.e. a subset of a set that contains less elements than the set.

It is appreciated that any vector or matrix notation utilized herein is example in nature and is employed solely for purposes of explanation. Accordingly, it is understood that the approaches detailed in this disclosure are not limited to being implemented solely using vectors or matrices, and that the associated processes and computations may be equivalently performed with respect to sets, sequences, groups, etc., of data, observations, information, signals, samples, symbols, elements, etc. Furthermore, it is appreciated that references to a "vector" may refer to a vector of any size or orientation, e.g. including a 1 × 1 vector (e.g. a scalar), a 1×M vector (e.g. a row vector), and an M×1 vector (e.g. a column vector). Similarly, it is appreciated that references to a "matrix" may refer to matrix of any size or orientation, e.g. including a 1×1 matrix (e.g. a scalar), a 1×M matrix (e.g. a row vector), and an M×1 matrix (e.g. a column vector).

As used herein, the term "software" includes any type of executable instruction or set of instructions, including embedded data in the software. Software may also encompass firmware. Software may create, delete or modify software, e.g., through a machine learning process.

A "module" as used herein is understood to include any kind of functionality-implementing entity, which may include hardware-defined modules such as special-purpose hardware, software-defined modules such as a processor executing software or firmware, and mixed modules that include both hardware-defined and software-defined components. A module may thus be an analog circuit or component, digital circuit, mixed-signal circuit or component, logic circuit, processor, microprocessor, Central Processing Unit (CPU), application processor, Graphics Processing Unit (GPU), Digital Signal Processor (DSP), Field Programmable Gate Array (FPGA), integrated circuit, discrete circuit, Application Specific Integrated Circuit (ASIC), etc., or any combination thereof. Any other kind of implementation of the respective functions which will be described below in further detail may also be understood as a "module". It is understood that any two (or more) of the modules detailed herein may be realized as a single module with substantially equivalent functionality, and conversely that any single module detailed herein may be realized as two (or more) separate modules with substantially equivalent functionality. Additionally, references to a "module" may refer to two or more modules that collectively form a single module.

The term "terminal device" utilized herein includes user-side devices (both mobile and immobile) that may connect to a core network and various external networks via a radio access network. The term "network access node" as utilized herein includes to a network-side device that provides a radio access network with which terminal devices may connect and exchange information with other networks through the network access node.

The term "base station" used in reference to an access node of a mobile communication network may be understood to include a macro base station (such as, for example, for cellular communications), micro/pico/femto base station, Node B, evolved Node-B (base station), Home base station, Remote Radio Head (RRH), relay point, access point (AP, such as, for example, for Wi-Fi, WLAN, WiGig millimeter Wave (mmWave), etc.) etc. As used herein, a "cell" in the setting of telecommunications may be understood to include an area (e.g., a public place) or space (e.g., multi-story building or airspace) served by a base station or access point. The base station may include mobile, e.g., installed in a vehicle, and the covered area or space may move accordingly. Accordingly, a cell may be covered by a set of co-located transmit and receive antennas, which also able to cover and serve a specific sector of the cell. A base station or access point may serve one or more cells, where a cell is characterized by a distinct communication channel or standard (e.g., a base station offering 2G, 3G and LTE services). Macro-, micro-, femto-, pico-cells may have different cell sizes and ranges, and may be static or dynamic (e.g., a cell installed in a drone or balloon) or change its characteristic dynamically (for example, from macrocell to picocell, from static deployment to dynamic deployment, from omnidirectional to directional, from broadcast to narrowcast). Communication channels may include narrowband or broadband. Communication channels may also use carrier aggregation across radio communication technologies and standards, or flexibly adapt bandwidth to communication needs. In addition, terminal devices may include or act as base stations or access points or relays or other network access nodes.

The term "network" as utilized herein, for example, in reference to a communication network such as a mobile communication network, encompasses both an access section of a network (e.g., a radio access network (RAN) section) and a core section of a network (e.g., a core network section), but also, for an end-to-end system, encompasses mobile (including peer-to-peer, device to device, or machine to machine communications), access, backhaul, server, backbone and gateway/interchange elements to other networks of the same or different type. The term "radio idle mode" or "radio idle state" used herein in reference to a mobile terminal refers to a radio control state in which the mobile terminal is not allocated one dedicated communication channel of a mobile communication network. The term "radio connected mode" or "radio connected state" used in reference to a mobile terminal refers to a radio control state in which the mobile terminal is allocated one dedicated uplink communication channel of a mobile communication network. The uplink communication channel may be a physical channel or a virtual channel. Idle or connection mode may be connection-switched or packet-switched.

Unless explicitly specified, the term "transmit" encompasses both direct (point-to-point) and indirect transmission (via one or more intermediary points or nodes). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of logical data over a software-level connection). For example, a processor may transmit or receive data in the form of radio signals with another processor, where the physical transmission and reception is handled by radio-layer components such as RF transceivers and antennas, and the logical transmission and reception is performed by the processor. The term "communicate" encompasses one or both of transmitting and receiving i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Any of the radio links described herein may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP Rel. 19 (3rd Generation Partnership Project Release 19) and subsequent Releases (such as Rel. 20, Rel. 21, etc.), 3GPP 5G, 5G, 3GPP 6G, 6G, 6^{th} Generation Cellular Networks, 5GNew Radio (5GNR), 3GPP 5G New Radio, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefoni system D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Radio Local Area Networks (RLAN), Wi-Fi (based on IEEE802.11 and/or IEEE 802.11b (Wi-Fi 1) and/or IEEE 802.11a (Wi-Fi 2) and/or IEEE 802.11g (Wi-Fi 3) and/or 802.11n (Wi-Fi 4) and/or IEEE 802.11ac (Wi-Fi 5) and/or IEEE 802.11ax (Wi-Fi 6) and/or IEEE802.11be (Wi-Fi 7) and/or any follow-up WiFi related technology), Wireless Gigabit Alliance (WiGig) standard, mmWave standards in general (wireless systems operating at 10-300 GHz and above such as WiGig, IEEE 802.1 1ad, IEEE 802.1 lay, etc.), technologies operating above 300 GHz and THz bands, (3GPP/LTE based or IEEE 802.11p or IEEE 802.11bd and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others (typically operating in 5850 MHz to 5925 MHz or above (typically up to 5935 MHz following change proposals in CEPT Report 71)), the European ITS-G5 system (i.e. the European flavor of IEEE 802.1 1p based DSRC, including ITS-G5A (i.e., Operation of ITS-G5 in European ITS frequency bands dedicated to ITS for safety related applications in the frequency range 5,875 GHz to 5,905 GHz), ITS-G5B (i.e., Operation in European ITS frequency bands dedicated to ITS non- safety applications in the frequency range 5,855 GHz to 5,875 GHz), ITS-G5C (i.e., Operation of ITS applications in the frequency range 5,470 GHz to 5,725 GHz)), DSRC in Japan in the 700MHz band (including 715 MHz to 725 MHz), IEEE 802.11bd based systems, etc.

Aspects described herein can be used in the context of any spectrum management scheme including dedicated licensed spectrum, unlicensed spectrum, license exempt spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System / CBRS = Citizen Broadband Radio System in 3.55-3.7 GHz and further frequencies). Applicable spectrum bands include IMT (International Mobile Telecommunications) spectrum as well as other types of spectrum/bands, such as bands with national allocation (including 450 - 470 MHz, 1302-928 MHz (note: allocated for example in US (FCC Part 15)), 863-868.6 MHz (note: allocated for example in European Union (ETSI EN 1000 222)), 915.9-929.7 MHz (note: allocated for example in Japan), 917-923.5 MHz (note: allocated for example in South Korea), 755-779 MHz and 779-787 MHz (note: allocated for example in China), 790 - 960 MHz, 1710 - 2025 MHz, 2110 - 2200 MHz, 2300 - 2400 MHz, 2.4-2.4835 GHz (note: it is an ISM band with global availability and it is used by Wi-Fi technology family (11b/g/n/ax) and also by Bluetooth), 2500 - 2690 MHz, 698-790 MHz, 1110 - 790 MHz, 3400 - 3600 MHz, 3400 - 3800 MHz, 3800 - 4200 MHz, 3.55-3.7 GHz (note: allocated for example in the US for Citizen Broadband Radio Service), 5.15-5.25 GHz and 5.25-5.35 GHz and 5.47-5.725 GHz and 5.725-5.85 GHz bands (note: allocated for example in the US (FCC part 15), consists four U-NII bands in total 1000 MHz spectrum), 5.725-5.875 GHz (note: allocated for example in EU (ETSI EN 301 893)), 5.47-5.65 GHz (note: allocated for example in South Korea, 5925-7125 MHz and 5925-6425MHz band (note: under consideration in US and EU, respectively. Next generation Wi-Fi system is expected to include the 6 GHz spectrum as operating band but it is noted that, as of December 2017, Wi-Fi system is not yet allowed in this band. Regulation is expected to be finished in 2019-2020 time frame), IMT-advanced spectrum, IMT-2020 spectrum (expected to include 3600-3800 MHz, 3800 - 4200 MHz, 3.5 GHz bands, 1200 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), 57-64/66 GHz (note: this band has near-global designation for Multi-Gigabit Wireless Systems (MGWS)/WiGig . In US (FCC part 15) allocates total 14 GHz spectrum, while EU (ETSI EN 1002 567 and ETSI EN 301 217-2 for fixed P2P) allocates total 9 GHz spectrum), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

Aspects described herein can also implement a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.].

Some of the features in this document are defined for the network side, such as Access Points, eNodeBs, New Radio (NR) or next generation Node Bs (gNodeB or gNB - note that this term is typically used in the context of 3GPP fifth generation (5G) communication systems), etc. Still, a User Equipment (UE) may take this role as well and act as an Access Points, eNodeBs, gNodeBs, etc. I.e., some features defined for network equipment may be implemented by a UE.

As used herein, the term "circuitry" may refer to, be part of, or include a circuit, an integrated circuit (IC), a monolithic IC, a discrete circuit, a hybrid integrated circuit (HIC), an Application Specific Integrated Circuit (ASIC), an electronic circuit, a logic circuit, a microcircuit, a hybrid circuit, a microchip, a chip, a chiplet, a chipset, a multi-chip module (MCM), a semiconductor die, a system on a chip (SoC), a processor (shared, dedicated, or group), a processor circuit, a processing circuit, or associated memory (shared, dedicated, or group) operably coupled to the circuitry that execute one or more software or firmware programs, a combinational logic circuit, or other suitable hardware components that provide the described functionality. In some embodiments, the circuitry may be implemented in, or functions associated with the circuitry may be implemented by, one or more software or firmware modules. In some embodiments, circuitry may include logic, partially operable in hardware.

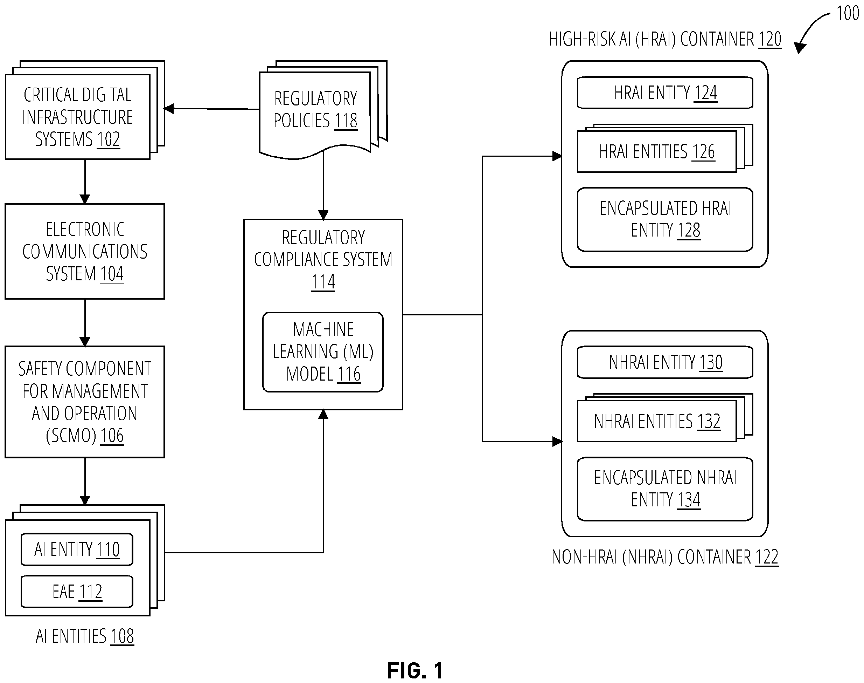

FIG. 1 illustrates a system 100 suitable for implementing one or more embodiments as described herein. Specifically, the system 100 is an example of a system that can physically and/or logically separate: (1) any AI entity of the critical infrastructure system which serves as a "safety component in the management and operation" as defined by the AI Regulatory Framework; and (2) any other AI entity of the same system. For example, outputs of any AI entity of the critical infrastructure system which serves as a "safety component in the management and operation" as defined by the AI Regulatory Framework are proposed to be "gated" such that verified decisions are authorized to be conveyed to other system entities. For those AI entities not verified, embodiments replaced unverified AI entities with a redundant non-AI based decision making entity to replace the AI-based decisions from the unverified AI entities.

As depicted in FIG. 1, a set of one or more critical digital infrastructure systems 102 are identified in accordance with a set of one or more regulatory policies 118. Examples of the regulatory policies 118 include those rules and policies defined by the AI Regulatory Framework. As previously discussed, in the [AIA Proposal], the "High Risk" category specifically relates to "Digital Infrastructure" which includes Wireless Communications systems such as 3GPP systems, stating "Annex III, Item 2 of [2]: Management and operation of critical infrastructure: (aa) AI systems intended to be used as safety components in the management and operation of the supply of water, gas, heating, electricity and critical digital infrastructure." The term "critical digital infrastructure" is further defined in the [EU Directive] on the resilience of critical entities. It explicitly includes "Providers of electronic communications services" such as 3GPP based wireless communications networks and others. Other examples set forth in Annex III of the [AIA] or [AIA Proposal] include biometric identification and categorisation of natural persons, education and vocational training, employment and workers management and access to self-employment, access to and enjoyment of essential private services and public services and benefits, law enforcement, migration and asylum and border control management, and administration of justice and democratic processes. However, the regulatory policies 118 may also comprise rules and policies defined by other political organizations, governments, and countries. Embodiments are not limited in this context.

By way of example, the regulatory policies 118 may comprise encoded values representing a summary of technical requirements as defined by Article 9 and Article 18 of the AI Regulatory Framework, as summarized in TABLE 1. Embodiments are not limited to this example.

**TABLE 1**

| | |
|---|---|
| Requirements | Summary as defined by the AI Act [1][2] |
| | |
| Data and data governance | High-risk AI systems ... may be developed on the basis of training, validation and testing data sets that meet the quality criteria ... |
| | |
| Technical documentation | The technical documentation may be drawn up in such a way to demonstrate that the high-risk AI system complies with the requirements |
| | |
| Record keeping | High-risk AI systems may be designed and developed with capabilities enabling the automatic recording of events ('logs') ... |
| | |
| Transparency and information to users | High-risk AI systems may ... ensure that their operation is sufficiently transparent to enable users to interpret the system's output and use it appropriately ... |
| | |
| Human oversight | High-risk AI systems may be designed and developed in such a way, including with appropriate human-machine interface tools, that they can be effectively overseen by natural persons during the period in which the AI system is in use ... |
| | |
| Accuracy robustness and cybersecurity | High-risk AI systems may ... achieve, in the light of their intended purpose, an appropriate level of accuracy... |
| | |
| Risk management system | A risk management system may be established, implemented, documented and maintained in relation to high-risk AI systems ... |
| | |
| Quality management system | Providers of high-risk AI systems may put a quality management system in place that ensures compliance with this Regulation ... |

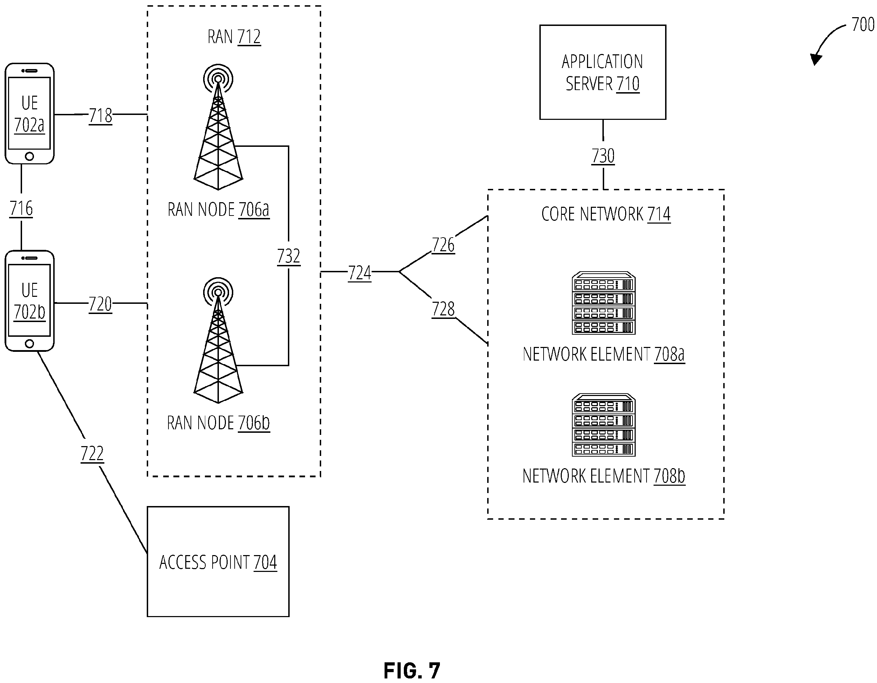

An electronic communications system 104 is one example of the critical digital infrastructure systems 102, as particularly defined by the [AIA Proposal] and [EC Directive] of the AI Regulatory Framework, for example. An example for the electronic communications system 104 is a 3GPP 5G or 6G wireless communications system. An example for the electronic communications system 104 is further described with reference to FIG. 7.

The electronic communications system 104 may comprise several components. In some examples, a component is a hardware element, software element, compute node, a part of a compute node, a software package, a software module, an AI/ML model, a data processor, a service, a device, a system, an entity such as any of those discussed herein. In some embodiments, one or more components of the electronic communications system 104 may comprise a safety component for management and operation (SCMO), such as SCMO 106. The SCMO 106 is defined by the regulatory policies 118. Although a single SCMO 106 is shown in FIG. 1, the electronic communications system 104 may have multiple SCMO depending on a particular implementation.

The SCMO 106 may comprise one or more AI entities 108. According to the [AIA], an artificial intelligence (Al) system refers to software and/or a machine-based system that is developed with one or more of Al/machine learning (ML) techniques and approaches list in Annex I of the [AIA], and can, for a given set of human-defined objectives, generate outputs such as content, predictions, inferences, recommendations, and/or decisions influencing the environments with which they interact. The AI/ML techniques and approaches include ML approaches such as supervised, unsupervised, and reinforcement learning, using a wide variety of methods including deep learning; logic-based and knowledge-based approaches, including knowledge representation, inductive (logic) programming, knowledge bases, inference and deductive engines, (symbolic) reasoning and expert systems; and statistical approaches, Bayesian estimation, search and optimization methods. Other AI/ML techniques/approaches may be included, such as those discussed herein.

The AI entities 108 in an Al system, such as the electronic communications system 104, are based on the definition of HRAI systems in [AIA] Article 6 and Annex III, as encoded into the regulatory policies 118. The [AIA] provides specific rules for Al systems that create a high risk to the health and safety or fundamental rights of natural persons. In line with a risk-based approach, those HRAI systems are permitted on the European market subject to compliance with mandatory requirements and an ex-ante conformity assessment. The classification of an Al system as an HRAI system is based on the intended purpose of the Al system, in line with existing product safety legislation. Therefore, the classification as high-risk depends on the function performed by the Al system and also on the specific purpose and modalities for which that system is used. In embodiments, Al systems can include closed Al systems and Al systems interacting with external (independent) entities/ components.

The electronic communications system 104 may implement one or more AI entities 108. The AI entities 108 may comprise either a single AI entity 110 or an encapsulated AI entity 112 of the electronic communications system 104. A single AI entity 110 is a single AI entity that does not contain or refer to other AI entities. An encapsulated AI entity 112 is an AI entity that encapsulates or refers to one or more other AI entities. The encapsulated AI entity 112 may organize the one or more other AI entities in a hierarchy, such as a tree structure or graph structure, for example.

The system 100 may have access to one or more regulatory policies 118 stored in a database. The regulatory policies 118 may represent a set of rules, regulations, laws, or policies as defined by a government entity, standards organization, technical organization, judicial entity, administrative entity, and other entities empowered to issue rules and regulations for a product, service, or industry. The rules, regulations, laws or policies are encoded into one or more values, codes, and fields of a defined digital data schema accessible by the regulatory compliance system 114. In one embodiment, for example, the regulatory policies 118 include rules, regulations, laws or policies defined by the AI Regulatory Framework. Embodiments are not limited to this example.

The system 100 further comprises a regulatory compliance system 114 that takes as input the regulatory policies 118 and the AI entities 108. The regulatory compliance system 114 may analyze an AI entity of the AI entities 108 and determine whether the AI entity is a HRAI entity or a NHRAI entity in compliance with the regulatory policies 118. In one embodiment, for example, the regulatory compliance system 114 may implement an ML model 116 comprising an ML classifier to perform this task. A ML classifier is an algorithm or model that is trained to classify or categorize data into different classes or categories based on patterns and features within the data. It takes input data and assigns it to one or more predefined classes based on the learned patterns. This process of classification is commonly used in various applications, including image recognition, spam filtering, sentiment analysis, and medical diagnosis. ML classifiers can be based on different algorithms, such as decision trees, support vector machines (SVM), random forests, or neural networks, depending on the specific requirements of the problem at hand. For example, the ML model 116 is an artificial neural network (ANN) trained on training data that comprises a training dataset, where the training dataset comprise a sufficiently large number of datapoints or observations for supervised learning, unsupervised learning, transfer learning, or reinforcement learning. Embodiments are not limited to this example.

When an AI entity 110 from the AI entities 108 is a single AI entity, the regulatory compliance system 114 analyzes the AI entity 110 in view of the regulatory policies 118 to determine whether the AI entity 110 is a HRAI or NHRAI. It then logically and/or physically separates the AI entity 110 into an HRAI container 120 or an NHRAI container 122 based on the analysis.

Logical separation may refer to storing an indication, representation, or identifier of the AI entity 110 in different data structures, hardware component (e.g., processor, processing core, etc.), or software component (e.g., address space, process thread, etc.) of the regulatory compliance system 114. A data structure is a way of organizing and storing data in a computer system, so that it can be efficiently accessed, modified, and used. It provides a logical and organized format for storing and manipulating data. Data structures define the relationship between the data, how the data is stored, the operations that can be performed on the data, and the restrictions or constraints imposed on the data. Common examples of data structures include arrays, linked lists, stacks, queues, trees, and graphs. The data structure has its own set of operations associated with it, such as searching, sorting, insertion, deletion, and traversal. In the context of patent applications, data structures may be described and claimed to protect new and useful ways of organizing and manipulating data, which can provide advantages such as improved efficiency, scalability, or functionality in various computer systems or software applications.

Physical separation may refer to storing the AI entity 110, such as source code, executable code or instructions, in a different hardware component or software component of the regulatory compliance system 114. One example may include a secure hardware component, such as a Trusted Execution Environment (TEE). TEE is a technology designed to provide a secure and isolated environment within a computer system. It offers a protected area where sensitive processes and data can be executed and stored securely, separate from the regular operating system and applications. The TEE ensures that critical operations are performed in a trusted manner, safeguarding against various threats and vulnerabilities. The TEE relies on hardware-based security measures, such as secure enclaves or secure processors, that provide features like secure boot, secure storage, and secure communication channels. These features help establish a trusted execution environment that protects sensitive information and ensures the confidentiality, integrity, and authenticity of data and processes. TEEs are commonly used in a variety of applications, including mobile devices, Internet of Things (IoT) devices, payment systems, digital rights management, and secure authentication. They enable secure execution of sensitive operations, such as cryptographic operations, secure key storage, secure biometric verification, and secure transaction processing.

When the AI entity is an encapsulated AI entity 112, the regulatory compliance system 114 is trained to analyze the AI entities 108 contained within the encapsulated AI entity 112. In accordance with the embodiments described herein, when the regulatory compliance system 114 determines that a single one of the AI entities 108 in the encapsulated AI entity 112 is an HRAI entity 124, the regulatory compliance system 114 logically and/or physically separates the encapsulated AI entity 112 in the HRAI container 120. This may occur even when the encapsulated AI entity 112 comprises one or more NHRAI entities 132. The regulatory compliance system 114 is trained in this manner to ensure compliance with the regulatory policies 118, specifically the rules and policies of the AI Regulatory Framework as defined by the EC and/or ESOs, or other government entities, regulatory standards entities, or technical standards entities.

With respect to the electronic communications system 104, for example, assume the HRAI entity 124 is an AI entity 110 for efficiently routing 911 services, while the NHRAI entity 130 is an AI entity 110 for measuring a signal-to-noise ratio (SNR) of radio signals. While NHRAI entity 130 alone may not meet the definition of "high-risk" as defined by the regulatory policies 118, when used in combination with the HRAI entity 124, the measurement of SNR of radio signals may impact whether a 911 call is completed. Consequently, a default configuration for the processing of an encapsulated AI entity 112 from the AI entities 108 classifies the encapsulated AI entity 112 as an encapsulated HRAI entity 128 even when the regulatory compliance system 114 determines that a single AI entity 110 of the encapsulated AI entity 112 is an HRAI entity 124.

When the regulatory compliance system 114 determines that all of the AI entities in the encapsulated AI entity 112 are NHRAI entities, the regulatory compliance system 114 logically and/or physically separates the encapsulated AI entity 112 in the NHRAI container 122.

The HRAI container 120 may contain a single HRAI entity 124, multiple HRAI entities 126, an encapsulated HRAI entity 128, or some combination thereof. Similarly, the NHRAI container 122 may contain a single NHRAI entity 130, multiple NHRAI entities 130, an encapsulated NHRAI entity 134, or some combination thereof.

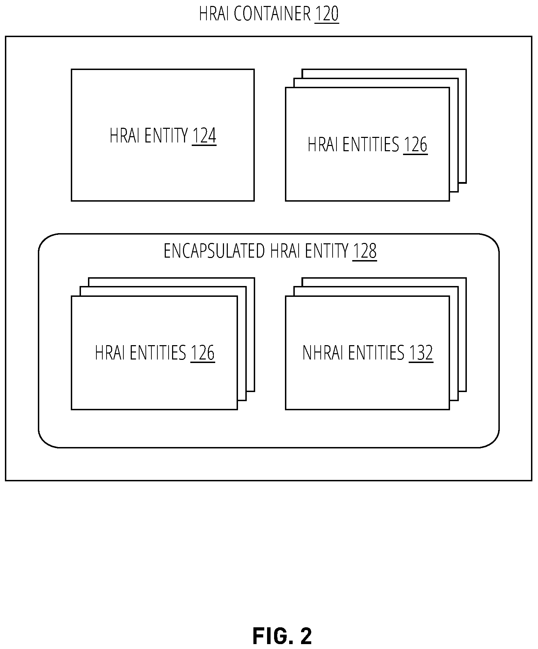

FIG. 2 illustrates an example of an HRAI container 120. As previously described, the HRAI container 120 may contain a single HRAI entity 124, multiple HRAI entities 126, an encapsulated HRAI entity 128, or some combination thereof. An encapsulated HRAI entity 128 may comprise an encapsulated AI entity 112 that includes multiple AI entities, where one of the AI entity 110 is classified as an HRAI entity 124 by the regulatory compliance system 114. For example, the encapsulated HRAI entity 128 may organize the other AI entities in a hierarchical manner in a same or similar manner as the encapsulated AI entity 112.

During processing by the regulatory compliance system 114, an encapsulated AI entity 112 is analyzed to determine whether any of the AI entities of the encapsulated AI entity 112 is a HRAI entity. When a single AI entity from the encapsulated AI entity 112 is a HRAI entity, the encapsulated AI entity 112 is placed within the HRAI container 120. Consequently, the encapsulated HRAI entity 128 may comprise one or more HRAI entities 126 and one or more NHRAI entities 130.

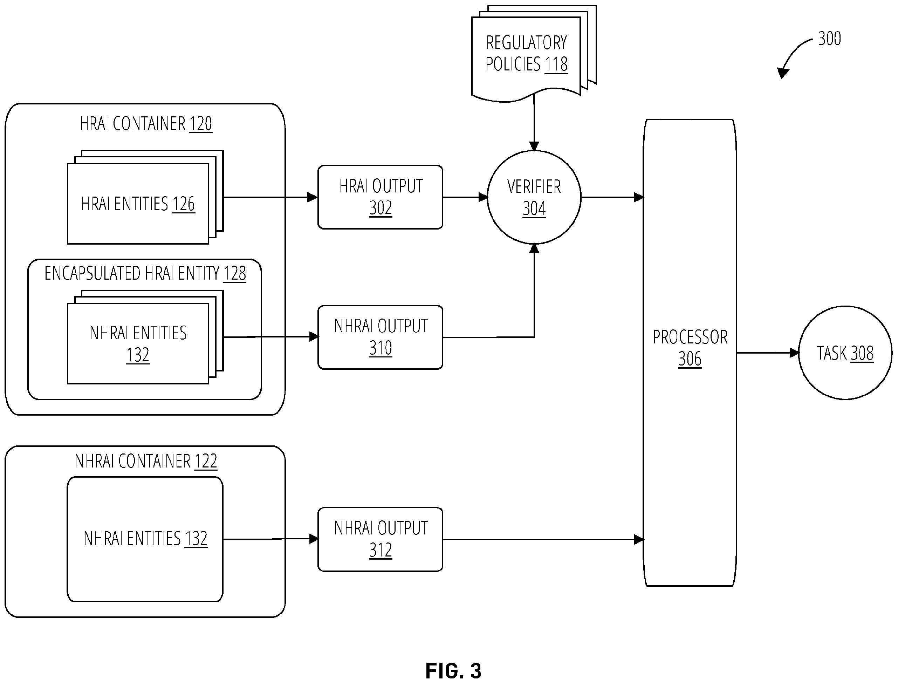

FIG. 3 illustrates a verification system 300. The verification system 300 may implement one or more verification operations for the system 100, such as the regulatory compliance system 114, for example.

Once the regulatory compliance system 114 logically and/or physically separates the AI entities 108 of the electronic communications system 104 from the critical infrastructure systems 144 into the HRAI container 120 or the NHRAI container 122, the verification system 300 monitors the output from the AI entities 108 from the HRAI container 120 and the NHRAI container 122, and verifies the output for compliance with the regulatory policies 118.

As depicted in FIG. 3, one or more of the HRAI entities 126 from the HRAI container 120 may receive input data, make an inference or prediction from the input data, and output the inference or prediction as HRAI output 302. A verifier 304 of the verification system 300 receives as input the HRAI output 302. It also receives as input the regulatory policies 118. The verifier 304 compares the HRAI output 302 against one or more of the regulatory policies 118. When the verifier 304 determines the HRAI output 302 comprises valid output, it passes the verified HRAI output 302 to the processor 306 for further processing for a given downstream task 308. When the verifier 304 determines the HRAI output 302 comprises invalid output, it blocks the unverified HRAI output 302 from the processor 306 to prevent further processing circuitry 804 for the task 308.

Similarly, one or more of the NHRAI entities 132 of an encapsulated HRAI entity 128 from the HRAI container 120 may receive input data, make an inference or prediction from the input data, and output the inference or prediction as NHRAI output 310. The verification operation is performed on the NHRAI entities 132 because they are encapsulated with an HRAI entity 124, and therefore are treated the same as an HRAI entity 124 by association with the HRAI entity 124. The verifier 304 of the verification system 300 receives as input the NHRAI output 310. It also receives as input the regulatory policies 118. The verifier 304 compares the NHRAI output 310 against one or more of the regulatory policies 118. When the verifier 304 determines the NHRAI output 310 comprises valid output, it passes the verified NHRAI output 310 to the processor 306 for further processing for a given downstream task 308. When the verifier 304 determines the NHRAI output 310 comprises invalid output, it blocks the unverified NHRAI output 310 from the processor 306 to prevent further processing circuitry 804 for the task 308.

In one embodiment, the verification system 300 does not perform any verification operations for the NHRAI entities 132 from the NHRAI container 122. One or more of the NHRAI entities 132 from the NHRAI container 122 may receive input data, make an inference or prediction from the input data, and output the inference or prediction as NHRAI output 312. The NHRAI output 312 bypasses the verifier 304 and instead it passes the NHRAI output 312 directly to the processor 306 for further processing for a given downstream task 308.

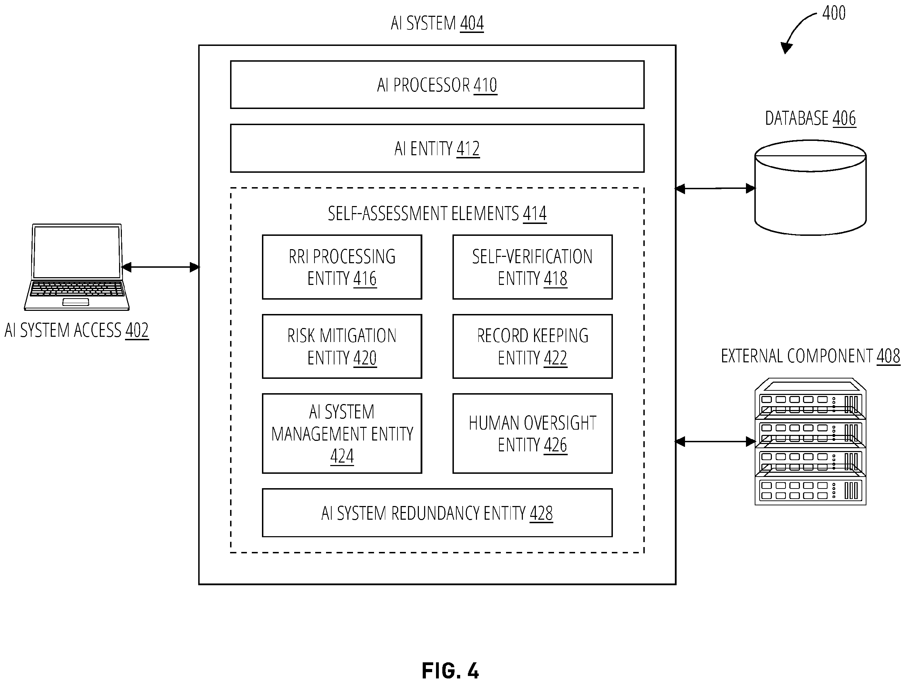

FIG. 4 illustrates an AI system architecture 400. The AI system architecture 400 illustrates an example of an AI system implementing one or more AI entities 108 for one or more critical infrastructure systems 144, such as the electronic communications system 104 described with reference to FIG. 1, for example.

According to the [AIA], an artificial intelligence (Al) system refers to software and/or a machine-based system that is developed with one or more of Al/machine learning (ML) techniques and approaches list in Annex I of the [AIA], and can, for a given set of human-defined objectives, generate outputs such as content, predictions, inferences, recommendations, and/or decisions influencing the environments with which they interact. The AI/ML techniques and approaches include ML approaches such as supervised, unsupervised, and reinforcement learning, using a wide variety of methods including deep learning; logic-based and knowledge-based approaches, including knowledge representation, inductive (logic) programming, knowledge bases, inference and deductive engines, (symbolic) reasoning and expert systems; and statistical approaches, Bayesian estimation, search and optimization methods. Other AI/ML techniques/approaches may be included, such as those discussed herein.

The entities in an Al system are based on the definition of HRAI systems in [AIA] Article 6 and Annex III. The [AIA] provides specific rules for Al systems that create a high risk to the health and safety or fundamental rights of natural persons. In line with a risk-based approach, those HRAI systems are permitted on the European market subject to compliance with mandatory requirements and an ex-ante conformity assessment. The classification of an Al system as an HRAI system is based on the intended purpose of the Al system, in line with existing product safety legislation. Therefore, the classification as high-risk depends on the function performed by the Al system and also on the specific purpose and modalities for which that system is used. In embodiments, Al systems can include closed Al systems and Al systems interacting with external (independent) entities/ components.

FIG. 4 depicts an example AI system architecture 400 including components of an AI system 404, which may be a closed Al system or an open Al system. A closed AI system is an AI system having no dependency on external and/or 3rd party components (e.g., external component 408). An open AI system is one in which external and/or 3rd party components (e.g., external component 408) are partially relied upon by the AI system 404. Entities such as the one or more databases (DB) 903 are considered to be under control of the AI system 404 and/or the owner or operator of the AI system 404, and are not considered to be external/3rd party components, for purposes of the present disclosure. The usage of the AI system 404 can be applied to any of the HRAI systems defined in [AIA], Annex III.

The AI system architecture 400 includes AI system access 402, which is used by a user to access the AI system 404 to use Al services, to perform human oversight (verify correct operation of the system, and the like), and the like. The AI system access 402 allows the AI system 404 to obtain input data from an authorized user. In some examples, a user can be authorized or authenticated using known techniques such as by using, for example, knowledge factors (e.g., the user knows and provides login credentials, full or partial password or passphrase, personal identification number (PIN), challenge-response or knowledge-based questions, and/or the like), ownership factors (e.g., the user has possession of HW and/or SW security tokens, credential documents such as an ID card, and/or the like), inherence factors (e.g., using the user's biometric data or biometric identifiers, signature, and/or the like), some of which may be used with existing single-factor or multi-factor authentication techniques. Examples of the authentication and/or authorization techniques include using API keys, basic access authentication ("Basic Auth"), Open Authorization (OAuth), hash-based message authentication codes (HMAC), Kerberos protocol, OpenlD, WeblD, and/or other authentication and/or authorization techniques. Additionally or alternatively, an authorized user can be assigned or otherwise associated with varying levels of permissions or authorizations to use specific types or categories of Al systems where, for example, the user may be permitted to use and/or approve usage of an AI system access 402 assigned to a specific HRAI category such as defined by the regulatory policies 118. For example, a user can have authorizations or permissions to use and/or approve usage of Al systems with HRAI categories 3-5 of the regulatory policies 118, but not permitted to use or approve Al systems with HRAI categories 1-2 and 6-8 of the regulatory policies 118. The AI system access 402 may include the use of various APIs, firmware, drivers, software glue, and/or any other communication means for conveying data between the various entities shown by FIG. 4. For purposes of the present disclosure, "input data" is data provided to or directly acquired by an Al system (e.g., AI system 404) on the basis of which the AI system 404 produces an output. In the example of FIG. 4, the AI system access 402 is depicted as a computing system (e.g., a laptop computer, desktop computer or workstation), however, the AI system access 402 can be or include any other type of computing device or system such as any of those discussed herein. For purposes of the present disclosure, the AI system access 402 can also be referred to as a "user" or "authorized user", and a "user" can refer to any natural or legal person, public authority, agency, a compute node/device, a system, robot or drone, a service, a SW agent, an Al agent, a HW component, a module/component/function of an AI system 404, a remote system or device, and/or other body, element, or entity using and/or interacting with an AI system 404 in any way.

The database 406 includes any suitable data storage means, which stores, for example, training data, testing data, validation data, user activity logs, AI system behavior logs, etc. For purposes of the present disclosure, "training data" is data used for training an AI system through fitting its learnable parameters, including the weights of a neural network. For purposes of the present disclosure, "testing data" is data used for providing an independent evaluation of the trained and validated AI system in order to confirm the expected performance of that system before its placing on the market or putting into service. For purposes of the present disclosure, "validation data" is data used for providing an evaluation of the trained AI system and for tuning its non-learnable parameters and its learning process, among other things, in order to prevent overfitting; whereas the validation dataset can be a separate dataset or part of the training dataset, either as a fixed or variable split.

The AI system 404 includes an AI processor 410 (sometimes referred to as the "entity for Al processing" or the like), which includes or implements one or more AI/ML techniques/approaches. The AI processor 410 can be the core of the AI system 404, and in some implementations (e.g., for supervised learning) is trained using a training dataset and optionally some additional data that is being acquired while the AI system 404 is being operated. Such an AI system 404 can rely on various AI/ML techniques/approaches including, for example, regression, classification, clustering, dimensionality reduction, ensemble methods, neural network (NN), deep learning, transfer learning, reinforcement learning (RL), natural language processing, word embeddings, topic classification, and/or any other AI/ML technique/approach such as those discussed herein. In some examples, the AI processor 410 is, or includes, an inference engine, a recommendation engine, an RL agent, an NN engine, a neural coprocessor, an HW accelerator, a special-purpose processor designed to operate one or more AI/ML models, a general-purpose processor, and/or combinations thereof. Additionally or alternatively, the AI processor 410 can operate an AI agent; an ML model such as an NN, and RL model , and/or any of those discussed herein; an AI/ML pipeline; an ensemble of AI/ML models; and/or any combinations thereof. For purposes of the present disclosure, the term "AI system" (with or without a reference label) as used herein may refer to the AI processor 410, the AI system 404 as a whole, the AI system architecture 400 as a whole, equipment used to perform one or more AI functions (e.g., hardware accelerators, processor circuitry, and the like) of an AI system 404, the AI processor 410, and/or the AI system architecture 400; one or more components or functions/functionalities of an AI system 404, AI processor 410, and/or AI system architecture 400; or any combination thereof. Additionally, the AI system 404 includes a set of self-assessment elements 414 including a risk-related information (RRI) processing entity 416, a risk mitigation entity 420, an AI system management entity 424, an AI system redundancy entity 428, a human oversight entity 426, a record keeping entity 422, and a self-verification entity 418.

The RRI processing entity 416 presents RRI to authorized user(s) for identifying the correct operation of the AI system 404. The RRI processing entity 416 takes the results of other entities, such as the self-verification entity 418 and processes identified RRI and unexpected behavior information such that it can be presented in a concise way to a user (e.g., by illustrating statistics on the decision making, including outlining unexpected biases of the statistics, and/or the like). In case of an issue, the user can use the provided information to take action (e.g., to terminate the Al system operation through the human oversight entity 426).

The risk mitigation entity 420 offers trade-offs to the user to choose from (e.g., functionality/risk trade-off such as, for example, offer less (more) functionalities implying less (more) risks, and/or the like). The risk mitigation entity 420 proposes a trade-off between risk and functionality to the user. For example, the risk mitigation entity 420 may propose that the AI system is periodically retrained using observed information obtained during operation. The upside is that this may improve the quality of the AI decision making. The risk is that the new data may introduce biases or other undesired characteristics. The authorized user will decide whether or not corresponding risks are being taken to achieve the expected improvements. Additionally or alternatively, a suitable AI/ML technique/approach can be used to determine whether or not corresponding risks are being taken to achieve the expected improvements.

Al AI system management entity 424 orchestrates AI system internal processes. For example, when a user requests information on AI system behavior or similar, the information is recovered from database 406, processed and presented to the user, etc. The AI system management entity 424 will orchestrate the interaction between the different building blocks of the AI system 404. For example, when one of the entities of an AI system is dysfunctional or operates in an unexpected way, then the AI system management entity 424 detects this behavior using information provided by the self-verification entity 418, and triggers the replacement of concerned components/entities by redundant replacement components/entities through the AI system redundancy entity 428.

The AI system redundancy entity 428 replaces redundant entities if failures or errors occur. In case that critical entities of AI system 404 (or AI processor 410) stop operating or operate erroneously, they are replaced by redundant (replacement) entities. The AI system redundancy entity 428 oversees redundant replacement options for entities, components, and/or elements of the AI system 404 (or AI processor 410). When some malfunctioning entity/component/element is identified, using information provided by the self-verification entity 418, the AI system redundancy entity 428 is used to configure a corresponding replacement entity/component/element. After the replacement, the correct operation of the AI system 404 is verified by the self-verification entity 418. If the replacement is successfully verified, then the operation of the AI system 404 may continue.

The human oversight entity 426 identifies information that may be relevant for authorized users to intervene (e.g., stop or pause the operation of the AI system 404) because biases are observed or similar. The human oversight entity 426 allows the authorized user to take action in case that the AI system 404 operates in an unexpected or undesired way (e.g., in case that the decision making processes indicate harmful biases). The user may then take several actions, including termination of the AI system operation, enforce a retraining of the AI entity 412, choose a different risk trade-off through the risk mitigation entity 420, and/or the like.

The self-verification entity 418 verifies the operation of the AI system 404 against criteria set out in the AI Regulatory Framework, including identification of eventual biases, verification of training data, and/or the like. The self-verification entity 418 to verify the correct operation of the newly trained AI system 404. In some implementations, the self-verification entity 418 uses a predefined test dataset, which is different from the dataset used for training, as input data to the AI system 404 in order to verify the correct operation. If the correct operation is verified, the AI system 404 is allowed for full usage for its intended purpose. In the opposite case (e.g., in case that biases and/or any unexpected behavior are detected), the operation of the AI system 404 is interrupted until the issues are resolved. Such a verification step is periodically repeated in case of retraining of the AI system 404 with new data, including the use of backpropagation techniques.

The record keeping entity 422 logs or otherwise track user activity, the behavior of the AI system 404, information on re-training of the AI system 404, and the like. When the AI system 404 is finally used for its intended purpose (after successful verification steps), the record keeping entity 422 logs user interactions (e.g., commands given by the authorized user, tracking/identifying input datasets, etc.), records or tracks the behavior of the AI system 404, and stores relevant information in the database 406.

Still referring to AI system 404 of FIG. 4, which includes interactions with external component 408 under 3rd party control. An "AI system interacting with external (independent) entities/ components" is an AI system that obtains training data from external entities under control of 3rd parties (e.g., a party independent of the developer or owner of the AI system 404). The AI system architecture 400 includes the AI system access 402, the AI system 404 (including its components/entities) and the database 406, which are the same as discussed previously with respect to FIG. 4. The AI system architecture 400 also includes the external component 408.

In this example, the AI system 404 interacts with external component 408, which may be independent entities/components operated by 3rd parties. The external component 408 may involve management and operation of critical infrastructure such as AI systems intended to be used as safety components in the management and operation of road traffic and the supply of water, gas, heating and electricity (see [AIA], Annex III, para 2(a)), and particularly electronic communications system 104 (see [AIA Proposal] and [EC Directive]).

In one example external component 408 is a vehicle (e.g., autonomous or semi-autonomous vehicle, drone, or robot) under control of a 3rd party providing sensor information and similar to the AI system 404.

For road traffic management, the AI system 404 may be implemented in a road side unit (RSU) or edge compute node co-located with one or more RSUs. The RSU interacts through a wireless link (e.g., cellular V2X (C-V2X) link) with nearby vehicles. Those vehicles provide information (e.g., sensor data, inference/predictions, mapping data, etc.) to the AI system 404 via the AI system access 402. This external information will be used by the AI system 404 for its internal decision making and possibly for the improvement of its AI/ML models.

In this example of an RSU interacting with nearby vehicles, the processing discussed previously remains valid. Additionally, in case that the information provided by the external entity/component is considered fully trustable and equal to internal information, no further steps are to be taken. It is expected, however, that external information (under 3rd party control) cannot be fully trusted and additional steps for control and supervision are to be taken. The self-verification entity 418 takes additional steps for verification, (e.g., after retraining based on the external data) wherein the operation of the AI system 404 is systematically verified by applying reference datasets as inputs (input data) and the outputs are then verified for correct operation of the Al system (e.g., eventual biases are identified, and the like).

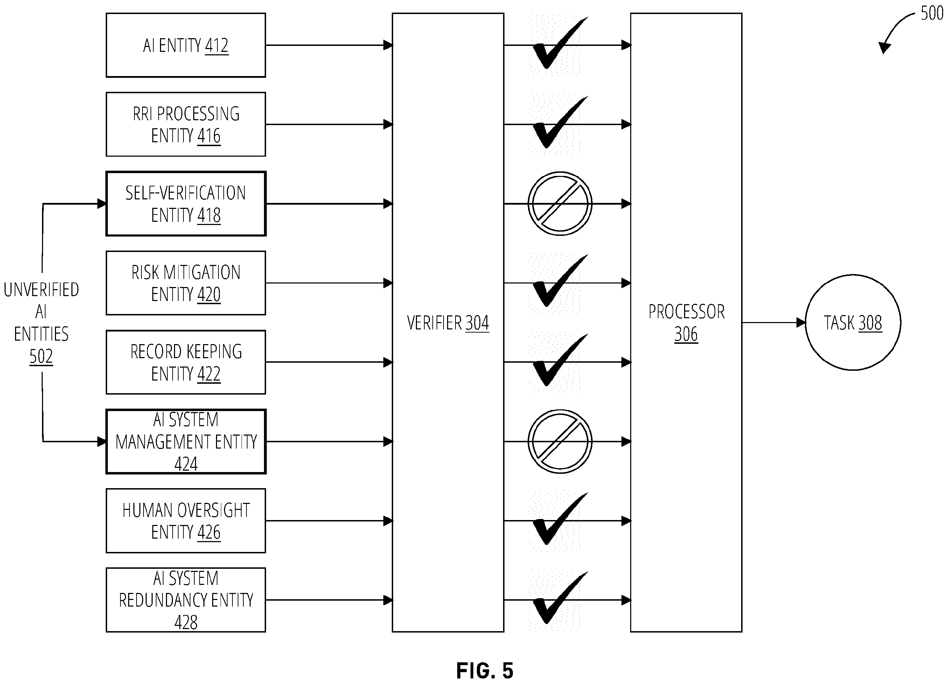

FIG. 5 illustrates an example of an operating environment 500 for the verification system 300 and the AI system architecture 400. The operating environment 500 assumes that the AI entities 108 implemented by the AI system 404 are HRAI entities 124 or NHRAI entities 132 contained within an encapsulated HRAI entity 128. As such, the verifier 304 of the verification system 300 analyzes and verifies outputs from the AI entities 108 or NHRAI entities 132 before allowing the processor 306 to process the outputs for the task 308.

As depicted in FIG. 5, by way of example and not limitation, the HRAI entity 124 or NHRAI entities 132 may comprise the AI entity 412, the RRI processing entity 416, the self-verification entity 418, the risk mitigation entity 420, the record keeping entity 422, the AI system management entity 424, the human oversight entity 426, and the AI system redundancy entity 428. The outputs from these AI entities 108 are input to the verifier 304. The verifier 304 determines, either alone or in combination, whether the outputs are valid outputs as defined by the regulatory policies 118. When the verifier 304 determines an output or combination of outputs are valid outputs, the verifier 304 verifies the output or combination of outputs and passes them to the processor 306 for processing for the task 308. When the verifier 304 determines an output or combination of outputs are invalid outputs, the verifier 304 does not verify the output or combination of outputs and does not pass them to the processor 306 for processing for the task 308. Further, the verifier 304 labels or tags the AI entities 108 that were not verified as unverified AI entities 502.

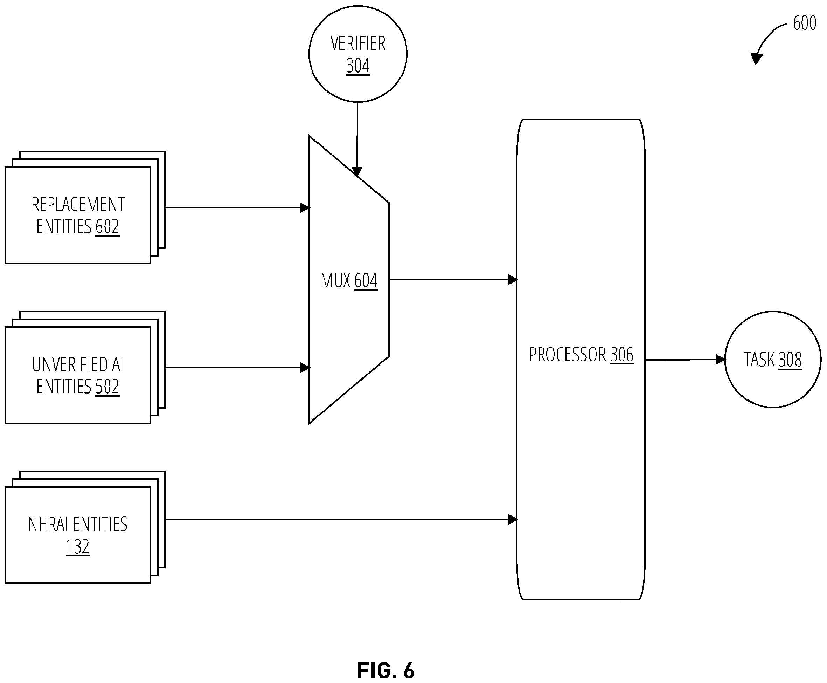

FIG. 6 illustrates a replacement system 600 to perform replacement operations for the AI system 404. As previously described, any "AI Entity meeting the `High Risk' criteria" of the [AIA] is a candidate to be monitored and supervised as summarized above. In case that an issue is identified (e.g., detection of inappropriate biases, etc.), typically the system and/or an authorized supervisor is taking appropriate steps. For example, the usage of related decisions of the "AI Entity meeting the `High Risk' criteria" is discontinued. Embodiments implement a technique that complement the system with a "redundant" decision making entity. In one embodiment, for example, the redundant decision making entity is applying "non-AI" based approaches and can thus be used to replace the critical AI entity at any suitable time. In some cases, the non-AI based decision may be less efficient than the AI based decision making. However, it is typically possible to address some of the challenges of the AI based decision making.

As depicted in FIG. 6, once the verifier 304 of the verification system 300 labels the unverified AI entities 502, the replacement system 600 searches for an AI or non-AI replacement element that can perform the same or similar operations as the unverified AI entities 502. The replacement system 600 identifies a set of one or more replacement entities 602 for the unverified AI entities 502 of the AI system 404. Outputs generated by the replacement entities 602 and the unverified AI entities 502 are then input to a multiplexer 604.

The multiplexer 604, often abbreviated as MUX, is a device used in digital electronics to combine multiple input signals into a single output signal, based on control inputs. It is commonly used in data transmission and digital circuit design. A multiplexer typically has multiple data inputs, a set of control inputs, and a single output. The control inputs determine which data input is selected and passed through to the output. The number of control inputs determines the number of data inputs that can be selected. The main purpose of a multiplexer is to save space and resources when multiple signals are to be transmitted or processed using a shared channel or circuit. By selecting the appropriate inputs with the control signals, the multiplexer can effectively route the desired information to the output. Multiplexers are widely used in various applications, including telecommunications, data storage, and computer architecture.

The multiplexer 604 receives a control signal from the verifier 304. The control signal determines which of the inputs to the multiplexer 604 is selected and passed through to the output of the multiplexer 604. When the input to the multiplexer 604 is an output from one or more of the unverified AI entities 502, the verifier 304 outputs a control signal to the multiplexer 604 to cause the multiplexer 604 to select an output from one or more of the replacement entities 602 in lieu of the output from the unverified AI entities 502. In this manner, the AI system 404 may quickly and seamlessly replace outputs from unverified AI entities 502 without disruption to the AI system 404. The selected output is then input to the processor 306 for further processing for the task 308.

FIG. 7 illustrates a wireless communications system 700 as an example for the electronic communications system 104 from the critical infrastructure systems 144. Embodiments are not limited to this example.

For purposes of convenience and without limitation, the example wireless communications system 700 is described in the context of the long-term evolution (LTE) and fifth generation (5G) new radio (NR) (5G NR) cellular networks communication standards as defined by one or more 3GPP technical specifications (TSs) and/or technical reports (TRs). However, other types of wireless standards are possible.

The wireless communications system 700 includes UE 702a and UE 702b (collectively referred to as the "UEs 102"). In this example, the UEs 102 are illustrated as smartphones (e.g., handheld touchscreen mobile computing devices connectable to one or more cellular networks). In other examples, any of the UEs 102 can include other mobile or non-mobile computing devices, such as consumer electronics devices, cellular phones, smartphones, feature phones, tablet computers, wearable computer devices, personal digital assistants (PDAs), pagers, wireless handsets, desktop computers, laptop computers, in-vehicle infotainment (IVI), in-car entertainment (ICE) devices, an Instrument Cluster (IC), head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, machine-type communications (MTC) devices, machine-to-machine (M2M) devices, Internet of Things (IoT) devices, or combinations of them, among others.

In some implementations, any of the UEs 102 may be IoT UEs, which can include a network access layer designed for low-power IoT applications utilizing short-lived UE connections. An IoT UE can utilize technologies such as M2M or MTC for exchanging data with an MTC server or device using, for example, a public land mobile network (PLMN), proximity services (ProSe), device-to-device (D2D) communication, sensor networks, IoT networks, or combinations of them, among others. The M2M or MTC exchange of data may be a machine-initiated exchange of data. An IoT network describes interconnecting IoT UEs, which can include uniquely identifiable embedded computing devices (within the Internet infrastructure), with short-lived connections. The IoT UEs may execute background applications (e.g., keep-alive messages or status updates) to facilitate the connections of the IoT network.

The UEs 102 are configured to connect (e.g., communicatively couple) with a radio access network (RAN) 712. In some implementations, the RAN 712 may be a next generation RAN (NG RAN), an evolved UMTS terrestrial radio access network (E-UTRAN), or a legacy RAN, such as a UMTS terrestrial radio access network (UTRAN) or a GSM EDGE radio access network (GERAN). As used herein, the term "NG RAN" may refer to a RAN 712 that operates in a 5G NR wireless communications system 700, and the term "E-UTRAN" may refer to a RAN 712 that operates in an LTE or 4G wireless communications system 700.

To connect to the RAN 712, the UEs 102 utilize connections (or channels) 718 and 720, respectively, which can include a physical communications interface or layer, as described below. In this example, the connections 718 and 720 are illustrated as an air interface to enable communicative coupling, and can be consistent with cellular communications protocols, such as a global system for mobile communications (GSM) protocol, a code-division multiple access (CDMA) network protocol, a push-to-talk (PTT) protocol, a PTT over cellular (POC) protocol, a universal mobile telecommunications system (UMTS) protocol, a 3GPP LTE protocol, a 5G NR protocol, or combinations of them, among other communication protocols.

The UE 702b is shown to be configured to access an access point (AP) 704 (also referred to as "WLAN node 704," "WLAN 704," "WLAN Termination 704," "WT 704" or the like) using a connection 722. The connection 722 can include a local wireless connection, such as a connection consistent with any IEEE 802.11 protocol, in which the AP 704 would include a wireless fidelity (Wi-Fi) router. In this example, the AP 704 is shown to be connected to the Internet without connecting to the core network of the wireless system, as described in further detail below.

The RAN 712 can include one or more nodes such as RAN nodes 706a and 706b (collectively referred to as "RAN nodes 106" or "RAN node 106") that enable the connections 718 and 720. As used herein, the terms "access node," "access point," or the like may describe equipment that provides the radio baseband functions for data or voice connectivity, or both, between a network and one or more users. These access nodes can be referred to as base stations (BS), gNodeBs, gNBs, eNodeBs, eNBs, NodeBs, RAN nodes, rode side units (RSUs), transmission reception points (TRxPs or TRPs), and the link, and can include ground stations (e.g., terrestrial access points) or satellite stations providing coverage within a geographic area (e.g., a cell), among others. As used herein, the term "NG RAN node" may refer to a RAN node 106 that operates in an 5G NR wireless communications system 700 (for example, a gNB), and the term "E-UTRAN node" may refer to a RAN node 106 that operates in an LTE or 4G wireless communications system 700 (e.g., an eNB). In some implementations, the RAN nodes 106 may be implemented as one or more of a dedicated physical device such as a macrocell base station, or a low power (LP) base station for providing femtocells, picocells or other like cells having smaller coverage areas, smaller user capacity, or higher bandwidth compared to macrocells.

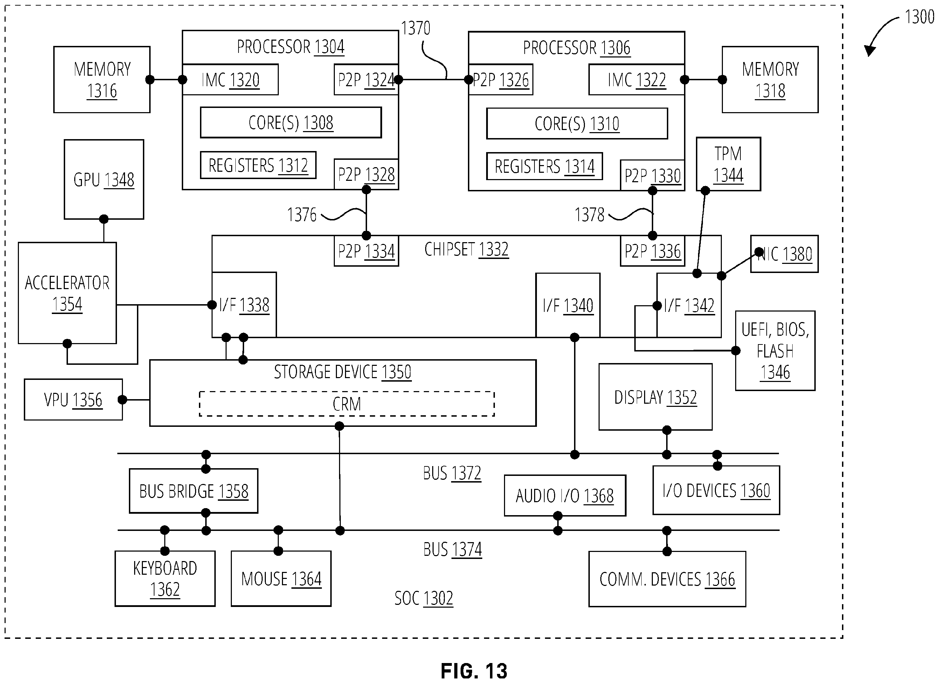

In some implementations, some of the RAN nodes 106 may be implemented as one or more software entities running on server computers as part of a virtual network, which may be referred to as a cloud RAN (CRAN) or a virtual baseband unit pool (vBBUP). The CRAN or vBBUP may implement a RAN function split, such as a packet data convergence protocol (PDCP) split in which radio resource control (RRC) and PDCP layers are operated by the CRAN/vBBUP and other layer two (e.g., data link layer) protocol entities are operated by individual RAN nodes 106; a medium access control (MAC)/physical layer (PHY) split in which RRC, PDCP, MAC, and radio link control (RLC) layers are operated by the CRAN/vBBUP and the PHY layer is operated by individual RAN nodes 106; or a "lower PHY" split in which RRC, PDCP, RLC, and MAC layers and upper portions of the PHY layer are operated by the CRAN/vBBUP and lower portions of the PHY layer are operated by individual RAN nodes 106. This virtualized framework allows the freed-up processor cores of the RAN nodes 106 to perform, for example, other virtualized applications. In some implementations, an individual RAN node 106 may represent individual gNB distributed units (DUs) that are connected to a gNB central unit (CU) using individual F1 interfaces (not shown in FIG. 13). In some implementations, the gNB-DUs can include one or more remote radio heads or RFEMs, and the gNB-CU may be operated by a server that is located in the RAN 712 (not shown) or by a server pool in a similar manner as the CRAN/vBBUP. Additionally or alternatively, one or more of the RAN nodes 106 may be next generation eNBs (ng-eNBs), including RAN nodes that provide E-UTRA user plane and control plane protocol terminations toward the UEs 102, and are connected to a 5G core network (e.g., core network 714) using a next generation interface.

In vehicle-to-everything (V2X) scenarios, one or more of the RAN nodes 106 may be or act as RSUs. The term "Road Side Unit" or "RSU" refers to any transportation infrastructure entity used for V2X communications. A RSU may be implemented in or by a suitable RAN node or a stationary (or relatively stationary) UE, where a RSU implemented in or by a UE may be referred to as a "UE-type RSU," a RSU implemented in or by an eNB may be referred to as an "eNB-type RSU," a RSU implemented in or by a gNB may be referred to as a "gNB-type RSU," and the like. In some implementations, an RSU is a computing device coupled with radio frequency circuitry located on a roadside that provides connectivity support to passing vehicle UEs 102 (vUEs 102). The RSU may also include internal data storage circuitry to store intersection map geometry, traffic statistics, media, as well as applications or other software to sense and control ongoing vehicular and pedestrian traffic. The RSU may operate on the 5.9 GHz Direct Short Range Communications (DSRC) band to provide very low latency communications for high speed events, such as crash avoidance, traffic warnings, and the like. Additionally or alternatively, the RSU may operate on the cellular V2X band to provide the aforementioned low latency communications, as well as other cellular communications services. Additionally or alternatively, the RSU may operate as a Wi-Fi hotspot (2.4 GHz band) or provide connectivity to one or more cellular networks to provide uplink and downlink communications, or both. The computing device(s) and some of the radiofrequency circuitry of the RSU may be packaged in a weatherproof enclosure suitable for outdoor installation, and can include a network interface controller to provide a wired connection (e.g., Ethernet) to a traffic signal controller or a backhaul network, or both.

Any of the RAN nodes 106 can terminate the air interface protocol and can be the first point of contact for the UEs 102. In some implementations, any of the RAN nodes 106 can fulfill various logical functions for the RAN 712 including, but not limited to, radio network controller (RNC) functions such as radio bearer management, uplink and downlink dynamic radio resource management and data packet scheduling, and mobility management.

In some implementations, the UEs 102 can be configured to communicate using orthogonal frequency division multiplexing (OFDM) communication signals with each other or with any of the RAN nodes 106 over a multicarrier communication channel in accordance with various communication techniques, such as, but not limited to, OFDMA communication techniques (e.g., for downlink communications) or SC-FDMA communication techniques (e.g., for uplink communications), although the scope of the techniques described here not limited in this respect. The OFDM signals can comprise a plurality of orthogonal subcarriers.

The RAN nodes 106 can transmit to the UEs 102 over various channels. Various examples of downlink communication channels include Physical Broadcast Channel (PBCH), Physical Downlink Control Channel (PDCCH), and Physical Downlink Shared Channel (PDSCH). Other types of downlink channels are possible. The UEs 102 can transmit to the RAN nodes 106 over various channels. Various examples of uplink communication channels include Physical Uplink Shared Channel (PUSCH), Physical Uplink Control Channel (PUCCH), and Physical Random Access Channel (PRACH). Other types of uplink channels are possible.

In some implementations, a downlink resource grid can be used for downlink transmissions from any of the RAN nodes 106 to the UEs 102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of physical channels to resource elements. Each resource block comprises a collection of resource elements; in the frequency domain, this may represent the smallest quantity of resources that currently can be allocated. There are several different physical downlink channels that are conveyed using such resource blocks.

The PDSCH carries user data and higher-layer signaling to the UEs 102. The PDCCH carries information about the transport format and resource allocations related to the PDSCH channel, among other things. It may also inform the UEs 102 about the transport format, resource allocation, and hybrid automatic repeat request (HARQ) information related to the uplink shared channel. Downlink scheduling (e.g., assigning control and shared channel resource blocks to the UE 702b within a cell) may be performed at any of the RAN nodes 106 based on channel quality information fed back from any of the UEs 102. The downlink resource assignment information may be sent on the PDCCH used for (e.g., assigned to) the UEs 102.

The PDCCH uses control channel elements (CCEs) to convey the control information. Before being mapped to resource elements, the PDCCH complex-valued symbols may first be organized into quadruplets, which may then be permuted using a sub-block interleaver for rate matching. In some implementations, each PDCCH may be transmitted using one or more of these CCEs, in which each CCE may correspond to nine sets of four physical resource elements collectively referred to as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. In LTE, there can be four or more different PDCCH formats defined with different numbers of CCEs (e.g., aggregation level, L=1, 2, 4, or 8).

Some implementations may use concepts for resource allocation for control channel information that are an extension of the above-described concepts. For example, some implementations may utilize an enhanced PDCCH (EPDCCH) that uses PDSCH resources for control information transmission. The EPDCCH may be transmitted using one or more enhanced CCEs (ECCEs). Similar to above, each ECCE may correspond to nine sets of four physical resource elements collectively referred to as an enhanced REG (EREG). An ECCE may have other numbers of EREGs.

The RAN nodes 106 are configured to communicate with one another using an interface 732. In examples, such as where the wireless communications system 700 is an LTE system (e.g., when the core network 714 is an evolved packet core (EPC) network), the interface 732 may be an X2 interface 732. The X2 interface may be defined between two or more RAN nodes 106 (e.g., two or more eNBs and the like) that connect to the EPC 714, or between two eNBs connecting to EPC 714, or both. In some implementations, the X2 interface can include an X2 user plane interface (X2-U) and an X2 control plane interface (X2-C). The X2-U may provide flow control mechanisms for user data packets transferred over the X2 interface, and may be used to communicate information about the delivery of user data between eNBs. For example, the X2-U may provide specific sequence number information for user data transferred from a master eNB to a secondary eNB; information about successful in sequence delivery of PDCP protocol data units (PDUs) to a UE 102 from a secondary eNB for user data; information of PDCP PDUs that were not delivered to a UE 102; information about a current minimum desired buffer size at the secondary eNB for transmitting to the UE user data, among other information. The X2-C may provide intra-LTE access mobility functionality, including context transfers from source to target eNBs or user plane transport control; load management functionality; inter-cell interference coordination functionality, among other functionality.

In some implementations, such as where the wireless communications system 700 is a 5G NR system (e.g., when the core network 714 is a 5G core network), the interface 732 may be an Xn interface 732. The Xn interface may be defined between two or more RAN nodes 106 (e.g., two or more gNBs and the like) that connect to the 5G core network 714, between a RAN node 106 (e.g., a gNB) connecting to the 5G core network 714 and an eNB, or between two eNBs connecting to the 5G core network 714, or combinations of them. In some implementations, the Xn interface can include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 102 in a connected mode (e.g., CM-CONNECTED) including functionality to manage the UE mobility for connected mode between one or more RAN nodes 106, among other functionality. The mobility support can include context transfer from an old (source) serving RAN node 106 to new (target) serving RAN node 106, and control of user plane tunnels between old (source) serving RAN node 106 to new (target) serving RAN node 106. A protocol stack of the Xn-U can include a transport network layer built on Internet Protocol (IP) transport layer, and a GPRS tunneling protocol for user plane (GTP-U) layer on top of a user datagram protocol (UDP) or IP layer(s), or both, to carry user plane PDUs. The Xn-C protocol stack can include an application layer signaling protocol (referred to as Xn Application Protocol (Xn-AP or XnAP)) and a transport network layer (TNL) that is built on a stream control transmission protocol (SCTP). The SCTP may be on top of an IP layer, and may provide the guaranteed delivery of application layer messages. In the transport IP layer, point-to-point transmission is used to deliver the signaling PDUs. In other implementations, the Xn-U protocol stack or the Xn-C protocol stack, or both, may be same or similar to the user plane and/or control plane protocol stack(s) shown and described herein.

The RAN 712 is shown to be communicatively coupled to a core network 714 (referred to as a "CN 714"). The CN 714 includes multiple network elements, such as network element 108a and network element 708b (collectively referred to as the "network elements 108"), which are configured to offer various data and telecommunications services to customers/subscribers (e.g., users of UEs 102) who are connected to the CN 714 using the RAN 712. The components of the CN 714 may be implemented in one physical node or separate physical nodes and can include components to read and execute instructions from a machine-readable or computer-readable medium (e.g., a non-transitory machine-readable storage medium). In some implementations, network functions virtualization (NFV) may be used to virtualize some of the network node functions described here using executable instructions stored in one or more computer-readable storage mediums, as described in further detail below. A logical instantiation of the CN 714 may be referred to as a network slice, and a logical instantiation of a portion of the CN 714 may be referred to as a network sub-slice. NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more network components or functions, or both.

An application server 710 may be an element offering applications that use IP bearer resources with the core network (e.g., UMTS packet services (PS) domain, LTE PS data services, among others). The application server 710 can also be configured to support one or more communication services (e.g., VoIP sessions, PTT sessions, group communication sessions, social networking services, among others) for the UEs 102 using the CN 714. The application server 710 can use an IP communications interface 730 to communicate with one or more network elements 708a.

In some implementations, the CN 714 may be a 5G core network (referred to as "5GC 714" or "5G core network 714"), and the RAN 712 may be connected with the CN 714 using a next generation interface 724. In some implementations, the next generation interface 724 may be split into two parts, a next generation user plane (NG-U) interface 714, which carries traffic data between the RAN nodes 106 and a user plane function (UPF), and the S1 control plane (NG-C) interface 726, which is a signaling interface between the RAN nodes 106 and access and mobility management functions (AMFs). Examples where the CN 714 is a 5G core network are discussed in more detail with regard to later figures.

In some implementations, the CN 714 may be an EPC (referred to as "EPC 714" or the like), and the RAN 712 may be connected with the CN 714 using an S1 interface 724. In some implementations, the S1 interface 724 may be split into two parts, an S1 user plane (S1-U) interface 728, which carries traffic data between the RAN nodes 106 and the serving gateway (S-GW), and the S1-MME interface 726, which is a signaling interface between the RAN nodes 106 and mobility management entities (MMEs).

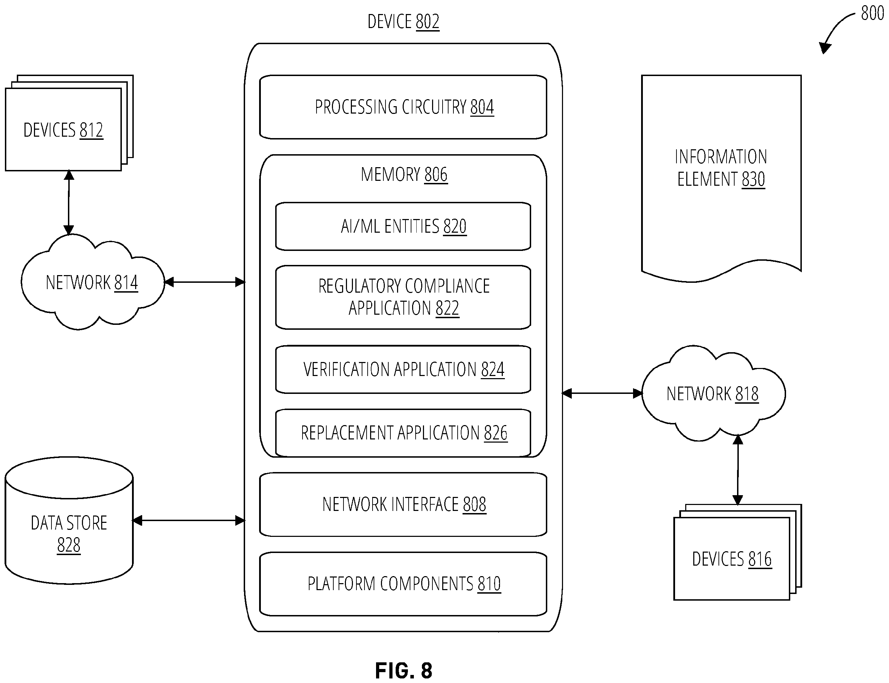

FIG. 8 illustrates an embodiment of a system 800. The system 800 may be suitable for implementing one or more embodiments as described herein. For example, the system 800 may be implemented for one or more devices of the system 100, the verification system 300, the AI system architecture 400, the replacement system 600, and/or the wireless communications system 700.

As depicted in FIG. 8, the system 800 may comprise a device 802 communicatively coupled to a set of devices 812 via a network 814. Examples for the devices 812 may include the AI system access 402 and/or remote devices for accessing the device 802 when implemented as part of a cloud computing architecture. The device 802 may also be communicatively coupled to a set of devices 816 via a network 818. Examples for the devices 816 may include downstream devices utilizing the AI/ML entities 820 or output from the AI/ML entities 820. In some cases, the device 802, devices 812 and devices 816 may communicate information using a defined information element 830. It may be appreciated that the system 800 may have more or less devices than shown in FIG. 8 with a different network topology as suitable for a given implementation. Embodiments are not limited in this context.

In various embodiments, the device 802 may comprise various hardware elements, such as a processing circuitry 804, a memory 806, a network interface 808, and a set of platform components 810. Similarly, the devices 812 and/or the devices 816 may include similar hardware elements as those depicted for the device 802. The device 802, devices 812, and devices 816, and associated hardware elements, are described in more detail with reference to a computing architecture 1300 as depicted in FIG. 13.

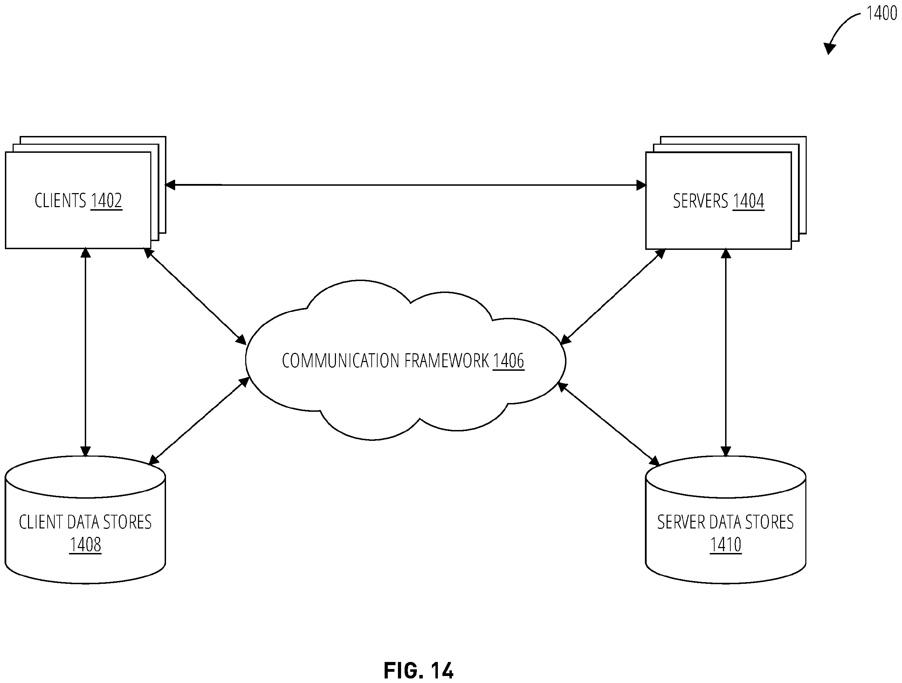

In various embodiments, the devices 802, 812 and/or 816 may communicate control, data and/or content information via one or both network 814, network 818. The network 814 and the network 818, and associated hardware elements, are described in more detail with reference to a communications architecture 1400 as depicted in FIG. 14.

The memory 806 may store a set of computer executable instructions that when executed by the processing circuitry 804, causes the processing circuitry 804 to perform operations for the regulatory compliance system 114, the verification system 300, the AI system 404, the replacement system 600, and/or the wireless communications system 700. As depicted in FIG. 8, for example, the memory 806 may comprise one or more AI/ML entities 820, a regulatory compliance application 822, a verification application 824, and a replacement application 826, among other parts.

The AI/ML entities 820 include any of the AI entities and/or ML models as described herein, including the AI entities 108, the HRAI entities 124, the NHRAI entities 132, the ML model 116, the AI entity 412, the self-assessment elements 414, and so forth. The AI/ML entities 820 may be classified, monitored and/or verified according to the operations described herein, including the regulatory compliance application 822, the verification application 824, and/or the replacement application 826. Embodiments are not limited to these examples.

The regulatory compliance application 822 may comprise or be implemented as instructions that when executed by the processing circuitry 804 causes the processing circuitry 804 to perform operations for the regulatory compliance system 114. For example, the regulatory compliance application 822 can receive as input the AI entities 108 and the regulatory policies 118. The ML model 116 of the regulatory compliance application 822 may process the inputs and make a suggestion, prediction or inference of whether the AI entities 108 may be classified as an HRAI entities 124 or NHRAI entities 132. The regulatory policies 118 may be stored as part of the memory 806 of the device 802 or as part of the external data store 828.

The verification application 824 may comprise or be implemented as instructions that when executed by the processing circuitry 804 causes the processing circuitry 804 to perform operations for the verification system 300. For example, the verifier 304 of the verification application 824 can receive as input the HRAI output 302 and/or the NHRAI output 310 from the HRAI container 120. The verifier 304 may also receive as input the regulatory policies 118. The verifier 304 may determine whether the HRAI output 302 and/or the NHRAI output 310 are valid or invalid outputs. The verifier 304 passes the valid outputs to the processing circuitry 804 to allow processing of the task 308. The verifier 304 blocks the invalid outputs from the processing circuitry 804 to prevent processing of the task 308. In one embodiment, for example, the verifier 304 may be implemented as an ML model similar to the ML model 116, for example.

The replacement application 826 may comprise or be implemented as instructions that when executed by the processing circuitry 804 causes the processing circuitry 804 to perform operations for the replacement system 600. For example, a software version of the multiplexer 604 may receive as input the output from the replacement entities 602 and the unverified AI entities 502. The multiplexer 604 may receive as input a control signal from the verifier 304. The multiplexer 604 may select the output from the replacement entities 602 for output to the processor 306 to allow processing for the task 308. The multiplexer 604 may block the output from the unverified AI entities 502 from output to the processor 306 to prevent processing for the task 308.

Operations for the disclosed embodiments may be further described with reference to the following figures. Some of the figures may include a logic flow. Although such figures presented herein may include a particular logic flow, it can be appreciated that the logic flow merely provides an example of how the general functionality as described herein can be implemented. Further, a given logic flow does not have to be executed in the order presented unless otherwise indicated. Moreover, some acts illustrated in a logic flow may be implemented in some embodiments. In addition, the given logic flow may be implemented by a hardware element, a software element executed by a processor, or any combination thereof. The embodiments are not limited in this context.

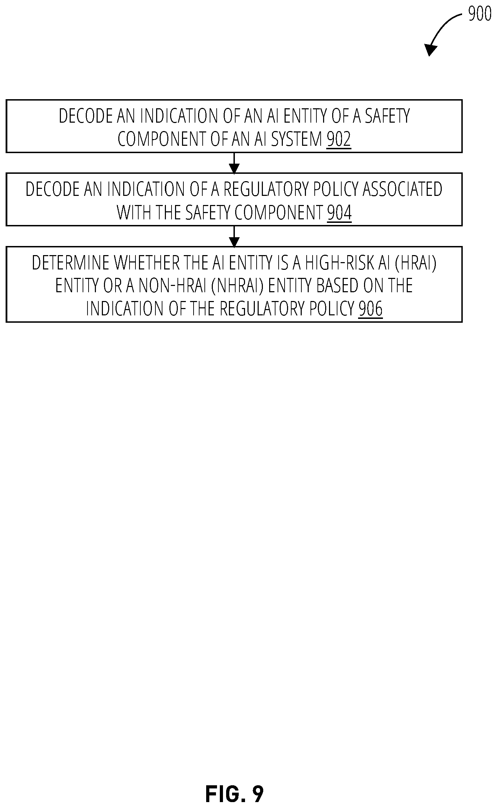

FIG. 9 illustrates an embodiment of a logic flow 900. The logic flow 900 may be representative of some of the operations executed by one or more embodiments described herein. For example, the logic flow 900 may include some of the operations performed by devices or entities within the regulatory compliance system 114. More particularly, the logic flow 900 illustrates an example where the regulatory compliance system 114 separates AI entities 108 into an HRAI container 120 or an NHRAI container 122.

In block 902, logic flow 900 decodes an indication of an AI entity of a safety component of an AI system. In block 904, logic flow 900 decodes an indication of a regulatory policy associated with the safety component. In block 906, logic flow 900 determines whether the AI entity is a high-risk AI (HRAI) entity or a non-HRAI (NHRAI) entity based on the indication of the regulatory policy.

By way of example, with reference to the regulatory compliance system 114 of FIG. 1, an ML model 116 of the regulatory compliance system 114 decodes an indication of an AI entity 110 or encapsulated AI entity 112 of an SCMO 106 of an AI system 404. In one embodiment, for example, the AI system 404 is part of one or more critical digital infrastructure systems 102 and the safety component comprises an SCMO 106 of a portion of the critical digital infrastructure systems 102. In one embodiment, for example, an electronic communications system 104 is one of the critical infrastructure systems 144. The ML model 116 also decodes an indication of a regulatory policy from the regulatory policies 118 associated with the SCMO 106. In one embodiment, for example, the regulatory policies 118 are an encoded set of rules, regulations, or procedures as defined by the AI Regulatory Framework. The ML model 116 determines whether the AI entity 110 is an HRAI entity 124 or an NHRAI entity 130 based on the indication of the regulatory policy. The ML model 116 determines whether the encapsulated AI entity 112 is an encapsulated HRAI entity 128 or an encapsulated NHRAI entity 134 based on the indication of the regulatory policy.

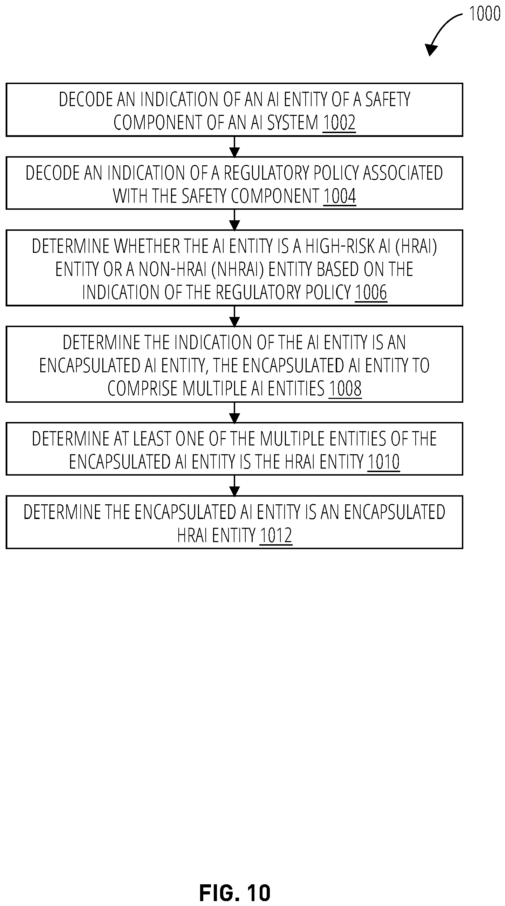

FIG. 10 illustrates an embodiment of a logic flow 1000. The logic flow 1000 may be representative of some of the operations executed by one or more embodiments described herein. For example, the logic flow 1000 may include some of the operations performed by devices or entities within the regulatory compliance system 114. More particularly, the logic flow 1000 illustrates an example where the regulatory compliance system 114 separates AI entities 108 into an HRAI container 120 or an NHRAI container 122.

In block 1002, logic flow 1000 decodes an indication of an AI entity of a safety component of an AI system. In block 1004, logic flow 1000 decodes an indication of a regulatory policy associated with the safety component. In block 1006, logic flow 1000 determines whether the AI entity is a high-risk AI (HRAI) entity or a non-HRAI (NHRAI) entity based on the indication of the regulatory policy. In block 1008, logic flow 1000 determines the indication of the AI entity is an encapsulated AI entity, the encapsulated AI entity to comprise multiple AI entities. In block 1010, logic flow 1000 determines one of the multiple entities of the encapsulated AI entity is the HRAI entity. In block 1012, logic flow 1000 determines the encapsulated AI entity is an encapsulated HRAI entity.

By way of example, with reference to the regulatory compliance system 114 of FIG. 1, an ML model 116 of the regulatory compliance system 114 decodes an indication of an AI entity 110 or encapsulated AI entity 112 of an SCMO 106 of an AI system 404. In one embodiment, for example, the AI system 404 is part of one or more critical digital infrastructure systems 102 and the safety component comprises an SCMO 106 of a portion of the critical digital infrastructure systems 102. In one embodiment, for example, an electronic communications system 104 is one of the critical infrastructure systems 144. The ML model 116 also decodes an indication of a regulatory policy from the regulatory policies 118 associated with the SCMO 106. In one embodiment, for example, the regulatory policies 118 are an encoded set of rules, regulations, or procedures as defined by the AI Regulatory Framework. The ML model 116 determines whether the AI entity 110 is an HRAI entity 124 or an NHRAI entity 130 based on the indication of the regulatory policy.

The ML model 116 determines whether the encapsulated AI entity 112 is an encapsulated HRAI entity 128 or an encapsulated NHRAI entity 134 based on the indication of the regulatory policy. For example, the encapsulated AI entity 112 may comprise multiple AI entities. The ML model 116 analyzes the multiple AI entities, and it determines whether one of the multiple entities of the encapsulated AI entity 112 is an HRAI entity 124. When one of the multiple entities is an HRAI entity 124, the ML model 116 determines the encapsulated AI entity 112 is an encapsulated HRAI entity 128. This may occur even when the encapsulated AI entity 112 includes an NHRAI entity 130.

In addition, or alternatively, a verifier 304 of a verification system 300 that is part of the regulatory compliance system 114 may verify an HRAI output 302 of the HRAI entity 124 or an NHRAI output 310 of the NHRAI entity 130 as a valid output or an invalid output. The verifier 304 receives the HRAI output 302 from the HRAI entity 124, and it verifies whether the HRAI output 302 from the HRAI entity 124 is a valid output or an invalid output based on the regulatory policies 118 associated with the SCMO 106. The verifier 304 forwards or passes the HRAI output 302 to a processing circuitry, such as processor 306, when the HRAI output 302 is a valid output. The verifier 304 blocks or restricts the HRAI output 302 from the processing circuity, such as processor 306, when the HRAI output 302 is an invalid output. Similarly, the verifier 304 receives an NHRAI output 310 from the NHRAI entity 130 when the NHRAI entity 130 is part of an encapsulated HRAI entity 128. The verifier 304 then verifies whether the NHRAI output 310 from the NHRAI entity 130 is a valid output or an invalid output based on regulatory policies 118 associated with the SCMO 106. The verifier 304 forwards or passes the NHRAI output 310 to a processing circuit, such as processor 306, when the NHRAI output 310 is a valid output. The verifier 304 blocks or restricts the NHRAI output 310 from the processing circuity, such as processor 306, when the NHRAI output 310 is an invalid output.

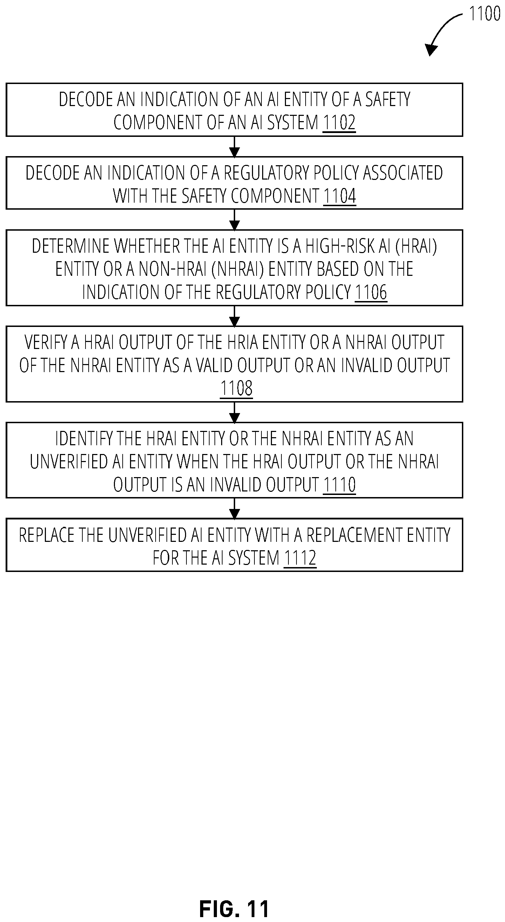

FIG. 11 illustrates an embodiment of a logic flow 1100. The logic flow 1100 may be representative of some of the operations executed by one or more embodiments described herein. For example, the logic flow 1100 may include some of the operations performed by devices or entities within the regulatory compliance system 114. More particularly, the logic flow 1100 illustrates an example where the regulatory compliance system 114 manages AI entities 108 separated into an HRAI container 120 or an NHRAI container 122.

In block 1102, logic flow 1100 decodes an indication of an AI entity of a safety component of an AI system. In block 1104, logic flow 1100 decodes an indication of a regulatory policy associated with the safety component. In block 1106, logic flow 1100 determines whether the AI entity is a high-risk AI (HRAI) entity or a non-HRAI (NHRAI) entity based on the indication of the regulatory policy. In block 1108, logic flow 1100 verifies a HRAI output of the HRIA entity or a NHRAI output of the NHRAI entity as a valid output or an invalid output. In block 1110, logic flow 1100 identifies the HRAI entity or the NHRAI entity as an unverified AI entity when the HRAI output or the NHRAI output is an invalid output. In block 1112, logic flow 1100 replaces the unverified AI entity with a replacement entity for the AI system.

By way of example, with reference to the regulatory compliance system 114 of FIG. 1, an ML model 116 of the regulatory compliance system 114 decodes an indication of an AI entity 110 or encapsulated AI entity 112 of an SCMO 106 of an AI system 404. In one embodiment, for example, the AI system 404 is part of one or more critical digital infrastructure systems 102 and the safety component comprises an SCMO 106 of a portion of the critical digital infrastructure systems 102. In one embodiment, for example, an electronic communications system 104 is one of the critical infrastructure systems 144. The ML model 116 also decodes an indication of a regulatory policy from the regulatory policies 118 associated with the SCMO 106. In one embodiment, for example, the regulatory policies 118 are an encoded set of rules, regulations, or procedures as defined by the AI Regulatory Framework. The ML model 116 determines whether the AI entity 110 is an HRAI entity 124 or an NHRAI entity 130 based on the indication of the regulatory policy.

The ML model 116 determines whether the encapsulated AI entity 112 is an encapsulated HRAI entity 128 or an encapsulated NHRAI entity 134 based on the indication of the regulatory policy. For example, the encapsulated AI entity 112 may comprise multiple AI entities. The ML model 116 analyzes the multiple AI entities, and it determines whether one of the multiple entities of the encapsulated AI entity 112 is an HRAI entity 124. When one of the multiple entities is an HRAI entity 124, the ML model 116 determines the encapsulated AI entity 112 is an encapsulated HRAI entity 128. This may occur even when the encapsulated AI entity 112 includes an NHRAI entity 130.

In addition, or alternatively, a verifier 304 of a verification system 300 that is part of the regulatory compliance system 114 may verify an HRAI output 302 of the HRAI entity 124 or an NHRAI output 310 of the NHRAI entity 130 as a valid output or an invalid output. The verifier 304 receives the HRAI output 302 from the HRAI entity 124, and it verifies whether the HRAI output 302 from the HRAI entity 124 is a valid output or an invalid output based on the regulatory policies 118 associated with the SCMO 106. The verifier 304 forwards or passes the HRAI output 302 to a processing circuitry, such as processor 306, when the HRAI output 302 is a valid output. The verifier 304 blocks or restricts the HRAI output 302 from the processing circuity, such as processor 306, when the HRAI output 302 is an invalid output. Similarly, the verifier 304 receives an NHRAI output 310 from the NHRAI entity 130 when the NHRAI entity 130 is part of an encapsulated HRAI entity 128. The verifier 304 then verifies whether the NHRAI output 310 from the NHRAI entity 130 is a valid output or an invalid output based on regulatory policies 118 associated with the SCMO 106. The verifier 304 forwards or passes the NHRAI output 310 to a processing circuit, such as processor 306, when the NHRAI output 310 is a valid output. The verifier 304 blocks or restricts the NHRAI output 310 from the processing circuity, such as processor 306, when the NHRAI output 310 is an invalid output.

The verifier 304 identifies the HRAI entity 124 or the NHRAI entity 130 as an unverified AI entity 110 when the HRAI output 302 or the NHRAI output 310 is an invalid output. A replacement system 600 replaces any unverified AI entities 502 with one or more replacement entities 602 for the AI system 404. A multiplexer 604 then selects outputs from the replacement entities 602 or the unverified AI entities 502 in response to a control signal from the verifier 304.

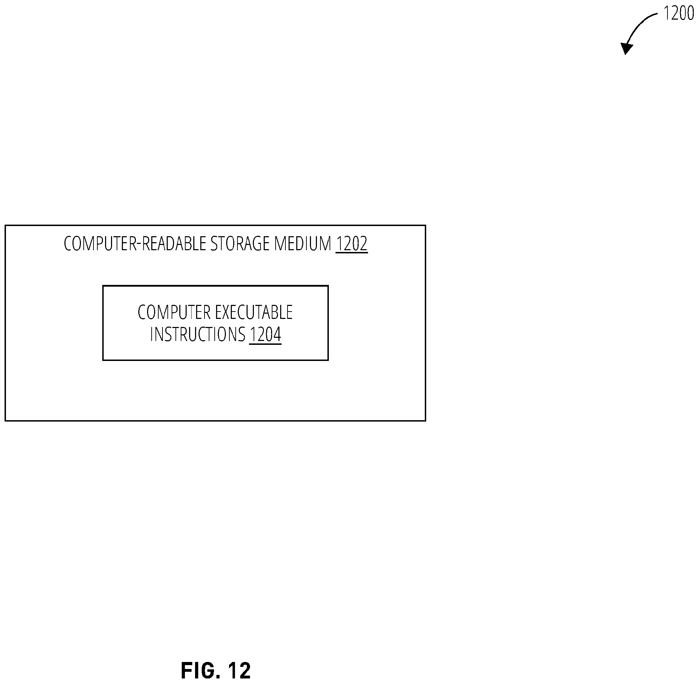

FIG. 12 illustrates an apparatus 1200. Apparatus 1200 may comprise any non-transitory computer-readable storage medium 1202 or machine-readable storage medium, such as an optical, magnetic or semiconductor storage medium. In various embodiments, apparatus 1200 may comprise an article of manufacture or a product. In some embodiments, the computer-readable storage medium 1202 may store computer executable instructions with which circuitry can execute. For example, computer executable instructions 1204 can include instructions to implement operations described with respect to any logic flows described herein. Examples of computer-readable storage medium 1202 or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions 1204 may include any suitable type of code, such as source code, compiled code, interpreted code, executable code, static code, dynamic code, object-oriented code, visual code, and the like.

FIG. 13 illustrates an embodiment of a computing architecture 1300. Computing architecture 1300 is a computer system with multiple processor cores such as a distributed computing system, supercomputer, high-performance computing system, computing cluster, mainframe computer, mini-computer, client-server system, personal computer (PC), workstation, server, portable computer, laptop computer, tablet computer, handheld device such as a personal digital assistant (PDA), or other device for processing, displaying, or transmitting information. Similar embodiments may comprise, e.g., entertainment devices such as a portable music player or a portable video player, a smart phone or other cellular phone, a telephone, a digital video camera, a digital still camera, an external storage device, or the like. Further embodiments implement larger scale server configurations. In other embodiments, the computing architecture 1300 may have a single processor with one core or more than one processor. Note that the term "processor" refers to a processor with a single core or a processor package with multiple processor cores. In one embodiment, the computing architecture 1300 is representative of the components of the system 800. More generally, the computing architecture 1300 is configured to implement logic, systems, logic flows, methods, apparatuses, and functionality described herein with reference to previous figures.

As used in this application, the terms "system" and "component" and "module" are intended to refer to a computer-related entity, either hardware, a combination of hardware and software, software, or software in execution, examples of which are provided by the example computing architecture 1300. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Example connections include parallel interfaces, serial interfaces, and bus interfaces.

As shown in FIG. 13, computing architecture 1300 comprises a system-on-chip (SoC) 1302 for mounting platform components. System-on-chip (SoC) 1302 is a point-to-point (P2P) interconnect platform that includes a first processor 1304 and a second processor 1306 coupled via a point-to-point interconnect 1370 such as an Ultra Path Interconnect (UPI). In other embodiments, the computing architecture 1300 may be of another bus architecture, such as a multi-drop bus. Furthermore, the processor 1304 and processor 1306 may be processor packages with multiple processor cores including core(s) 1308 and core(s) 1310, respectively. While the computing architecture 1300 is an example of a two-socket (2S) platform, other embodiments may include more than two sockets or one socket. For example, some embodiments may include a four-socket (4S) platform or an eight-socket (8S) platform. Each socket is a mount for a processor and may have a socket identifier. Note that the term platform may refers to a motherboard with components mounted such as the processor 1304 and chipset 1332. Some platforms may include additional components and some platforms may include sockets to mount the processors and/or the chipset. Furthermore, some platforms may not have sockets (e.g. SoC, or the like). Although depicted as a SoC 1302, one or more of the components of the SoC 1302 may also be included in a single die package, a multi-chip module (MCM), a multi-die package, a chiplet, a bridge, and/or an interposer. Therefore, embodiments are not limited to a SoC.

The processor 1304 and processor 1306 can be any of various commercially available processors, including without limitation an Intel^{®} Celeron^{®}, Core^{®}, Core (2) Duo^{®}, Itanium^{®}, Pentium^{®}, Xeon^{®}, and XScale^{®} processors; AMD^{®} Athlon^{®}, Duron^{®} and Opteron^{®} processors; ARM^{®} application, embedded and secure processors; IBM^{®} and Motorola^{®} DragonBall^{®} and PowerPC^{®} processors; IBM and Sony^{®} Cell processors; and similar processors. Dual microprocessors, multi-core processors, and other multi-processor architectures may also be employed as the processor 1304 and/or processor 1306. Additionally, the processor 1304 need not be identical to processor 1306.

Processor 1304 includes an integrated memory controller (IMC) 1320 and point-to-point (P2P) interface 1324 and P2P interface 1328. Similarly, the processor 1306 includes an IMC 1322 as well as P2P interface 1326 and P2P interface 1330. IMC 1320 and IMC 1322 couple the processor 1304 and processor 1306, respectively, to respective memories (e.g., memory 1316 and memory 1318). Memory 1316 and memory 1318 may be portions of the main memory (e.g., a dynamic random-access memory (DRAM)) for the platform such as double data rate type 4 (DDR4) or type 5 (DDR5) synchronous DRAM (SDRAM). In the present embodiment, the memory 1316 and the memory 1318 locally attach to the respective processors (i.e., processor 1304 and processor 1306). In other embodiments, the main memory may couple with the processors via a bus and shared memory hub. Processor 1304 includes registers 1312 and processor 1306 includes registers 1314.

Computing architecture 1300 includes chipset 1332 coupled to processor 1304 and processor 1306. Furthermore, chipset 1332 can be coupled to storage device 1350, for example, via an interface (I/F) 1338. The I/F 1338 may be, for example, a Peripheral Component Interconnect-enhanced (PCIe) interface, a Compute Express Link ^{®} (CXL) interface, or a Universal Chiplet Interconnect Express (UCIe) interface. Storage device 1350 can store instructions executable by circuitry of computing architecture 1300 (e.g., processor 1304, processor 1306, GPU 1348, accelerator 1354, vision processing unit 1356, or the like). For example, storage device 1350 can store instructions for device 802,, devices 812, devices 816, or the like.

Processor 1304 couples to the chipset 1332 via P2P interface 1328 and P2P 1334 while processor 1306 couples to the chipset 1332 via P2P interface 1330 and P2P 1336. Direct media interface (DMI) 1376 and DMI 1378 may couple the P2P interface 1328 and the P2P 1334 and the P2P interface 1330 and P2P 1336, respectively. DMI 1376 and DMI 1378 may be a high-speed interconnect that facilitates, e.g., eight Giga Transfers per second (GT/s) such as DMI 3.0. In other embodiments, the processor 1304 and processor 1306 may interconnect via a bus.

The chipset 1332 may comprise a controller hub such as a platform controller hub (PCH). The chipset 1332 may include a system clock to perform clocking functions and include interfaces for an I/O bus such as a universal serial bus (USB), peripheral component interconnects (PCIs), CXL interconnects, UCIe interconnects, interface serial peripheral interconnects (SPIs), integrated interconnects (I2Cs), and the like, to facilitate connection of peripheral devices on the platform. In other embodiments, the chipset 1332 may comprise more than one controller hub such as a chipset with a memory controller hub, a graphics controller hub, and an input/output (I/O) controller hub.

In the depicted example, chipset 1332 couples with a trusted platform module (TPM) 1344 and UEFI, BIOS, FLASH circuitry 1346 via I/F 1342. The TPM 1344 is a dedicated microcontroller designed to secure hardware by integrating cryptographic keys into devices. The UEFI, BIOS, FLASH circuitry 1346 may provide pre-boot code.

Furthermore, chipset 1332 includes the I/F 1338 to couple chipset 1332 with a high-performance graphics engine, such as, graphics processing circuitry or a graphics processing unit (GPU) 1348. In other embodiments, the computing architecture 1300 may include a flexible display interface (FDI) (not shown) between the processor 1304 and/or the processor 1306 and the chipset 1332. The FDI interconnects a graphics processor core in one or more of processor 1304 and/or processor 1306 with the chipset 1332.

The computing architecture 1300 is operable to communicate with wired and wireless devices or entities via the network interface (NIC) 180 using the IEEE 802 family of standards, such as wireless devices operatively disposed in wireless communication (e.g., IEEE 802.11 over-the-air modulation techniques). This includes Wi-Fi (or Wireless Fidelity), WiMax, and Bluetooth^{™} wireless technologies, 3G, 4G, LTE wireless technologies, among others. Thus, the communication can be a predefined structure as with a conventional network or simply an ad hoc communication between two devices. Wi-Fi networks use radio technologies called IEEE 802.11x (a, b, g, n, ac, ax, etc.) to provide secure, reliable, fast wireless connectivity. A Wi-Fi network can be used to connect computers to each other, to the Internet, and to wired networks (which use IEEE 802.3-related media and functions).

Additionally, accelerator 1354 and/or vision processing unit 1356 can be coupled to chipset 1332 via I/F 1338. The accelerator 1354 is representative of any type of accelerator device (e.g., a data streaming accelerator, cryptographic accelerator, cryptographic coprocessor, an offload engine, etc.). One example of an accelerator 1354 is the Intel^{®} Data Streaming Accelerator (DSA). The accelerator 1354 may be a device including circuitry to accelerate copy operations, data encryption, hash value computation, data comparison operations (including comparison of data in memory 1316 and/or memory 1318), and/or data compression. For example, the accelerator 1354 may be a USB device, PCI device, PCIe device, CXL device, UCIe device, and/or an SPI device. The accelerator 1354 can also include circuitry arranged to execute machine learning (ML) related operations (e.g., training, inference, etc.) for ML models. Generally, the accelerator 1354 may be specially designed to perform computationally intensive operations, such as hash value computations, comparison operations, cryptographic operations, and/or compression operations, in a manner that is more efficient than when performed by the processor 1304 or processor 1306. Because the load of the computing architecture 1300 may include hash value computations, comparison operations, cryptographic operations, and/or compression operations, the accelerator 1354 can greatly increase performance of the computing architecture 1300 for these operations.

The accelerator 1354 may include one or more dedicated work queues and one or more shared work queues (each not pictured). Generally, a shared work queue is configured to store descriptors submitted by multiple software entities. The software may be any type of executable code, such as a process, a thread, an application, a virtual machine, a container, a microservice, etc., that share the accelerator 1354. For example, the accelerator 1354 may be shared according to the Single Root I/O virtualization (SR-IOV) architecture and/or the Scalable I/O virtualization (S-IOV) architecture. Embodiments are not limited in these contexts. In some embodiments, software uses an instruction to atomically submit the descriptor to the accelerator 1354 via a non-posted write (e.g., a deferred memory write (DMWr)). One example of an instruction that atomically submits a work descriptor to the shared work queue of the accelerator 1354 is the ENQCMD command or instruction (which may be referred to as "ENQCMD" herein) supported by the Intel^{®} Instruction Set Architecture (ISA). However, any instruction having a descriptor that includes indications of the operation to be performed, a source virtual address for the descriptor, a destination virtual address for a device-specific register of the shared work queue, virtual addresses of parameters, a virtual address of a completion record, and an identifier of an address space of the submitting process is representative of an instruction that atomically submits a work descriptor to the shared work queue of the accelerator 1354. The dedicated work queue may accept job submissions via commands such as the movdir64b instruction.

Various I/O devices 1360 and display 1352 couple to the bus 1372, along with a bus bridge 1358 which couples the bus 1372 to a second bus 1374 and an I/F 1340 that connects the bus 1372 with the chipset 1332. In one embodiment, the second bus 1374 may be a low pin count (LPC) bus. Various devices may couple to the second bus 1374 including, for example, a keyboard 1362, a mouse 1364 and communication devices 1366.

Furthermore, an audio I/O 1368 may couple to second bus 1374. Many of the I/O devices 1360 and communication devices 1366 may reside on the system-on-chip (SoC) 1302 while the keyboard 1362 and the mouse 1364 may be add-on peripherals. In other embodiments, some the I/O devices 1360 and communication devices 1366 are add-on peripherals and do not reside on the system-on-chip (SoC) 1302.

FIG. 14 illustrates a block diagram of an example communications architecture 1400 suitable for implementing various embodiments as previously described. The communications architecture 1400 includes various common communications elements, such as a transmitter, receiver, transceiver, radio, network interface, baseband processor, antenna, amplifiers, filters, power supplies, and so forth. The embodiments, however, are not limited to implementation by the communications architecture 1400.

As shown in FIG. 14, the communications architecture 1400 includes one or more clients 1402 and servers 1404. The clients 1402 may implement a client version of the device 802, for example. The servers 1404 may implement a server version of the device 802, for example. The clients 1402 and the servers 1404 are operatively connected to one or more respective client data stores 1408 and server data stores 1410 that can be employed to store information local to the respective clients 1402 and servers 1404, such as cookies and/or associated contextual information.

The clients 1402 and the servers 1404 may communicate information between each other using a communication framework 1406. The communications communication framework 1406 may implement any well-known communications techniques and protocols. The communications communication framework 1406 may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators).

(117) The communication framework 1406 may implement various network interfaces arranged to accept, communicate, and connect to a communications network. A network interface may be regarded as a specialized form of an input output interface. Network interfaces may employ connection protocols including without limitation direct connect, Ethernet (e.g., thick, thin, twisted pair 10/800/1000 Base T, and the like), token ring, wireless network interfaces, cellular network interfaces, IEEE 802.11 network interfaces, IEEE 802.16 network interfaces, IEEE 802.20 network interfaces, and the like. Further, multiple network interfaces may be used to engage with various communications network types. For example, multiple network interfaces may be employed to allow for the communication over broadcast, multicast, and unicast networks. When processing requirements dictate a greater amount speed and capacity, distributed network controller architectures may similarly be employed to pool, load balance, and otherwise increase the communicative bandwidth implemented by clients 1402 and the servers 1404. A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks.

The components and features of the devices described above may be implemented using any combination of discrete circuitry, application specific integrated circuits (ASICs), logic gates and/or single chip architectures. Further, the features of the devices may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It will be appreciated that the example devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would be divided, omitted, or included in embodiments.

Machine-readable storage including machine-readable instructions, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in one embodiment. The appearances of the phrase "in one embodiment" in various places in the specification are not referring to the same embodiment. Moreover, unless otherwise noted the features described above are recognized to be usable together in any combination. Thus, any features discussed separately may be employed in combination with each other unless it is noted that the features are incompatible with each other.

With general reference to notations and nomenclature used herein, the detailed descriptions herein may be presented in terms of program procedures executed on a computer or network of computers. These procedural descriptions and representations are used by those skilled in the art to effectively convey the substance of their work to others skilled in the art.

A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It is to be noted, however, that some of these and similar terms are to be associated with the appropriate physical quantities and are merely convenient labels applied to those quantities.

Further, the manipulations performed are often referred to in terms, such as adding or comparing, which are commonly associated with mental operations performed by a human operator. No such capability of a human operator is necessary, or desirable in some cases, in any of the operations described herein, which form part of one or more embodiments. Rather, the operations are machine operations. Useful machines for performing operations of various embodiments include general purpose digital computers or similar devices.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Various embodiments also relate to apparatus or systems for performing these operations. This apparatus may be specially constructed for the purpose or it may comprise a general purpose computer as selectively activated or reconfigured by a computer program stored in the computer. The procedures presented herein are not related to a particular computer or other apparatus. Various general purpose machines may be used with programs written in accordance with the teachings herein, or it may prove convenient to construct more specialized apparatus to perform the method steps. The structure for a variety of these machines will appear from the description given.

What has been described above includes examples of the disclosed architecture. It is, of course, not possible to describe a number of conceivable combination of components and/or methodologies, but one of ordinary skill in the art may recognize that many further combinations and permutations are possible. Accordingly, the novel architecture is intended to embrace such alterations, modifications and variations that fall within the spirit and scope of the appended claims.

The various elements of the devices as previously described with reference to FIGS. 1 - _ may include various hardware elements, software elements, or a combination of both. Examples of hardware elements may include devices, logic devices, components, processors, microprocessors, circuits, processors, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

One or more aspects of one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

It will be appreciated that the example devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would be divided, omitted, or included in embodiments.

Machine-readable storage including machine-readable instructions, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in one embodiment. The appearances of the phrase "in one embodiment" in various places in the specification are not referring to the same embodiment. Moreover, unless otherwise noted the features described above are recognized to be usable together in any combination. Thus, any features discussed separately may be employed in combination with each other unless it is noted that the features are incompatible with each other.

The following examples pertain to further embodiments, from which numerous permutations and configurations will be apparent.

### First Set of Examples

Claim 1: general approach of a separation of AI entities into i) AI entities meeting "High-Risk" criteria and ii) AI entities NOT meeting "High Risk" criteria of the AI Act.

Dependent Claim to Claim 1: introduction of a gating function for the outputs of the AI entities meeting "High-Risk" criteria. This gating function may be controlled by an entity for "Verification of AI decisions with respect to requirements of the AI Act". Those AI based decisions are forwarded for further processing which meet the requirements of the AI Act.

Claim 2: encapsulation of AI entities as illustrated by FIG. 2, including the proposal of a hierarchical encapsulation.

Dependent Claim to Claim 2: A container consisting of an encapsulation of AI entities may qualify as a "High Risk" AI system/application/component following the definitions of Annex III of the AI Act in particular if one or multiple of the AI sub-components meet the "High Risk" criteria.

Dependent Claim to Claim 2: Any encapsulation of AI entities (including such encapsulations consisting of "non-High-Risk" AI systems/applications/components only) may be verified to determine whether the encapsulation meets the "High Risk criteria". In case that the high level container is to be considered "High Risk", corresponding gating features as described in FIG. 1 are to be applied. An example of a hierarchical organization of AI entities is illustrated below:

Claim 3: general approach to replace decisions issued by "High-Risk" AI entities by non-AI based decision upon the trigger of an entity for "Verification of AI decisions with respect to requirements of the AI Act". Indeed in case that the decisions of the "High Risk" AI entities do not comply with the requirements of the AI Act, action is to be taken. The proposal to replace corresponding decisions by results of a non-AI based decision component will address the problem.

### Second Set of Examples

In one example, a method of managing artificial intelligence (AI), the method includes decoding an indication of an AI entity of a safety component of an AI system, decoding an indication of a regulatory policy associated with the safety component, and determining whether the AI entity is a high-risk AI (HRAI) entity or a non-HRAI (NHRAI) entity based on the indication of the regulatory policy.

The method may also include where the AI system includes a critical digital infrastructure system and the safety component includes a safety component for management and operation of a portion of the critical digital infrastructure system.

The method may also include determining the indication of the AI entity is an encapsulated AI entity, the encapsulated AI entity to comprise multiple AI entities, determining one of the multiple entities of the encapsulated AI entity is the HRAI entity, and determining the encapsulated AI entity is an encapsulated HRAI entity.

The method may also include verifying a HRAI output of the HRAI entity or a NHRAI output of the NHRAI entity as a valid output or an invalid output.

The method may also include receiving a HRAI output from the HRAI entity, verifying whether the HRAI output from the HRAI entity is a valid output or an invalid output based on a regulatory policy associated with the safety component, forwarding the HRAI output to a processing circuit when the HRAI output is a valid output, and blocking the HRAI output from the processing circuity when the HRAI output is an invalid output.

The method may also include receiving a NHRAI output from the NHRAI entity when the NHRAI entity is part of an encapsulated HRAI entity, verifying whether the NHRAI output from the NHRAI entity is a valid output or an invalid output based on a regulatory policy associated with the safety component, forwarding the NHRAI output to a processing circuit when the NHRAI output is a valid output, and blocking the NHRAI output from the processing circuity when the NHRAI output is an invalid output.

The method may also include verifying a HRAI output of the HRIA entity or a NHRAI output of the NHRAI entity as a valid output or an invalid output, identifying the HRAI entity or the NHRAI entity as an unverified AI entity when the HRAI output or the NHRAI output is an invalid output, and replacing the unverified AI entity with a replacement entity for the AI system.

The method may also include where the AI system is an electronic communication system includes a wireless communication system.

In one example, a computing apparatus includes processing circuitry. The computing apparatus also includes a memory storing instructions that, when executed by the processing circuitry, causes the processing circuitry to decode an indication of an AI entity of a safety component of an AI system, decode an indication of a regulatory policy associated with the safety component, and determine whether the AI entity is a high-risk AI (HRAI) entity or a non-HRAI (NHRAI) entity based on the indication of the regulatory policy.

The computing apparatus may also include where the AI system includes a critical digital infrastructure system and the safety component includes a safety component for management and operation of a portion of the critical digital infrastructure system.

The computing apparatus may also include the processing circuitry to determine the indication of the AI entity is an encapsulated AI entity, the encapsulated AI entity to comprise multiple AI entities, determine one of the multiple entities of the encapsulated AI entity is the HRAI entity, and determine the encapsulated AI entity is an encapsulated HRAI entity.

The computing apparatus may also include the processing circuitry to verify a HRAI output of the HRAI entity or a NHRAI output of the NHRAI entity as a valid output or an invalid output.

The computing apparatus may also include the processing circuitry to receive a HRAI output from the HRAI entity, verify whether the HRAI output from the HRAI entity is a valid output or an invalid output based on a regulatory policy associated with the safety component, forward the HRAI output to a processing circuit when the HRAI output is a valid output, and block the HRAI output from the processing circuity when the HRAI output is an invalid output.

The computing apparatus may also include the processing circuitry to receive a NHRAI output from the NHRAI entity when the NHRAI entity is part of an encapsulated HRAI entity, verify whether the NHRAI output from the NHRAI entity is a valid output or an invalid output based on a regulatory policy associated with the safety component, forward the NHRAI output to a processing circuit when the NHRAI output is a valid output, and block the NHRAI output from the processing circuity when the NHRAI output is an invalid output.

The computing apparatus may also include the processing circuitry to verify a HRAI output of the HRIA entity or a NHRAI output of the NHRAI entity as a valid output or an invalid output, identify the HRAI entity or the NHRAI entity as an unverified AI entity when the HRAI output or the NHRAI output is an invalid output, and replace the unverified AI entity with a replacement entity for the AI system.

In one example, a non-transitory computer-readable storage medium, the computer-readable storage medium including instructions that when executed by a computer, cause the computer to decode an indication of an AI entity of a safety component of an AI system, decode an indication of a regulatory policy associated with the safety component, and determine whether the AI entity is a high-risk AI (HRAI) entity or a non-HRAI (NHRAI) entity based on the indication of the regulatory policy.

The computer-readable storage medium may also include determine the indication of the AI entity is an encapsulated AI entity, the encapsulated AI entity to comprise multiple AI entities, determine one of the multiple entities of the encapsulated AI entity is the HRAI entity, and determine the encapsulated AI entity is an encapsulated HRAI entity.

The computer-readable storage medium may also include receive a HRAI output from the HRAI entity, verify whether the HRAI output from the HRAI entity is a valid output or an invalid output based on a regulatory policy associated with the safety component, forward the HRAI output to a processing circuit when the HRAI output is a valid output, and block the HRAI output from the processing circuity when the HRAI output is an invalid output.

The computer-readable storage medium may also include receive a NHRAI output from the NHRAI entity when the NHRAI entity is part of an encapsulated HRAI entity, verify whether the NHRAI output from the NHRAI entity is a valid output or an invalid output based on a regulatory policy associated with the safety component, forward the NHRAI output to a processing circuit when the NHRAI output is a valid output, and block the NHRAI output from the processing circuity when the NHRAI output is an invalid output.

The computer-readable storage medium may also include verify a HRAI output of the HRIA entity or a NHRAI output of the NHRAI entity as a valid output or an invalid output, identify the HRAI entity or the NHRAI entity as an unverified AI entity when the HRAI output or the NHRAI output is an invalid output, and replace the unverified AI entity with a replacement entity for the AI system.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than some features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

The foregoing description of example embodiments has been presented for the purposes of illustration and description. It is not intended limit the present disclosure to the precise forms disclosed. Many modifications and variations are possible in light of this disclosure. It is intended that the scope of the present disclosure be limited not by this detailed description, but rather by the claims appended hereto. Future filed applications claiming priority to this application may claim the disclosed subject matter in a different manner, and may generally include any set of one or more limitations as variously disclosed or otherwise demonstrated herein.

## Claims

1. A method of managing artificial intelligence (AI), the method comprising:
decoding an indication of an AI entity of a safety component of an AI system;
decoding an indication of a regulatory policy associated with the safety component; and
determining whether the AI entity is a high-risk AI (HRAI) entity or a non-HRAI (NHRAI) entity based on the indication of the regulatory policy.

2. The method of claim 1, wherein the AI system comprises a critical digital infrastructure system and the safety component comprises a safety component for management and operation of at least a portion of the critical digital infrastructure system.

3. The method of any of claims 1 to 2, comprising:
determining the indication of the AI entity is an encapsulated AI entity, the encapsulated AI entity to comprise multiple AI entities;
determining at least one of the multiple entities of the encapsulated AI entity is the HRAI entity; and
determining the encapsulated AI entity is an encapsulated HRAI entity.

4. The method of any of claims 1 to 3, comprising verifying a HRAI output of the HRAI entity or a NHRAI output of the NHRAI entity as a valid output or an invalid output.

5. The method of any of claims 1 to 4, comprising:
receiving a HRAI output from the HRAI entity;
verifying whether the HRAI output from the HRAI entity is a valid output or an invalid output based on a regulatory policy associated with the safety component;
forwarding the HRAI output to a processing circuit when the HRAI output is a valid output; and
blocking the HRAI output from the processing circuity when the HRAI output is an invalid output.

6. The method of any of claims 1 to 5, comprising:
receiving a NHRAI output from the NHRAI entity when the NHRAI entity is part of an encapsulated HRAI entity;
verifying whether the NHRAI output from the NHRAI entity is a valid output or an invalid output based on a regulatory policy associated with the safety component;
forwarding the NHRAI output to a processing circuit when the NHRAI output is a valid output; and
blocking the NHRAI output from the processing circuity when the NHRAI output is an invalid output.

7. The method of any of claims 1 to 6, comprising:
verifying a HRAI output of the HRIA entity or a NHRAI output of the NHRAI entity as a valid output or an invalid output;
identifying the HRAI entity or the NHRAI entity as an unverified AI entity when the HRAI output or the NHRAI output is an invalid output; and
replacing the unverified AI entity with a replacement entity for the AI system.

8. An apparatus for managing artificial intelligence (AI), comprising:
processing circuitry; and
a memory storing instructions that, when executed by the processing circuitry, causes the processing circuitry to:
decode an indication of an AI entity of a safety component of an AI system;
decode an indication of a regulatory policy associated with the safety component; and
determine whether the AI entity is a high-risk AI (HRAI) entity or a non-HRAI (NHRAI) entity based on the indication of the regulatory policy.

9. The apparatus of claim 8, the processing circuitry to:
determine the indication of the AI entity is an encapsulated AI entity, the encapsulated AI entity to comprise multiple AI entities;
determine at least one of the multiple entities of the encapsulated AI entity is the HRAI entity; and
determine the encapsulated AI entity is an encapsulated HRAI entity.

10. The apparatus of any of claims 8 to 9, the processing circuitry to verify a HRAI output of the HRAI entity or a NHRAI output of the NHRAI entity as a valid output or an invalid output.

11. The apparatus of any of claims 8 to 10, the processing circuitry to:
receive a HRAI output from the HRAI entity;
verify whether the HRAI output from the HRAI entity is a valid output or an invalid output based on a regulatory policy associated with the safety component;
forward the HRAI output to a processing circuit when the HRAI output is a valid output ; and
block the HRAI output from the processing circuity when the HRAI output is an invalid output.

12. The apparatus of any of claims 8 to 11, the processing circuitry to:
receive a NHRAI output from the NHRAI entity when the NHRAI entity is part of an encapsulated HRAI entity;
verify whether the NHRAI output from the NHRAI entity is a valid output or an invalid output based on a regulatory policy associated with the safety component;
forward the NHRAI output to a processing circuit when the NHRAI output is a valid output; and
block the NHRAI output from the processing circuity when the NHRAI output is an invalid output.

13. The apparatus of any of claims 8 to 12, the processing circuitry to:
verify a HRAI output of the HRIA entity or a NHRAI output of the NHRAI entity as a valid output or an invalid output;
identify the HRAI entity or the NHRAI entity as an unverified AI entity when the HRAI output or the NHRAI output is an invalid output; and
replace the unverified AI entity with a replacement entity for the AI system.

14. An apparatus comprising means to perform a method as claimed in any preceding claim.

15. Machine-readable storage including machine-readable instructions, when executed, to implement a method or realize an apparatus as claimed in any preceding claim.
